(19) Europäisches Patentamt
European Patent Office
Office européen des brevets

(11) **EP 3 281 184 B1**

(12) **EUROPÄISCHE PATENTSCHRIFT**

(45) Veröffentlichungstag und Bekanntmachung des Hinweises auf die Patenterteilung:
**08.01.2020 Patentblatt 2020/02**

(21) Anmeldenummer: **16717286.5**

(22) Anmeldetag: **06.04.2016**

(51) Int Cl.:
*G07D 9/00* (2006.01)   *G07D 5/02* (2006.01)
*G06T 7/62* (2017.01)

(86) Internationale Anmeldenummer:
**PCT/EP2016/057522**

(87) Internationale Veröffentlichungsnummer:
**WO 2016/162378 (13.10.2016 Gazette 2016/41)**

(54) **VERFAHREN UND VORRICHTUNG ZUR BESTIMMUNG DES FÜLLSTANDS VON MÜNZTUBEN**

METHOD AND DEVICE FOR DETERMINING THE FILL LEVEL OF COIN TUBES

PROCÉDÉ ET DISPOSITIF DE DÉTERMINATION DE L'ÉTAT DE REMPLISSAGE DE TUBES DE PIÈCES DE MONNAIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.04.2015 DE 102015105286**

(43) Veröffentlichungstag der Anmeldung:
**14.02.2018 Patentblatt 2018/07**

(73) Patentinhaber: **Crane Payment Innovations Ltd.**
**Royton**
**Oldham**
**OL2 6JZ (GB)**

(72) Erfinder: **SCHNEIDER, Thorsten**
**21641 Apensen (DE)**

(74) Vertreter: **Peterreins Schley**
**Patent- und Rechtsanwälte**
**Hermann-Sack-Strasse 3**
**80331 München (DE)**

(56) Entgegenhaltungen:
**EP-A1- 1 990 778      DE-A1- 3 926 407**
**DE-A1- 4 041 078      DE-A1-102004 034 149**
**DE-U1- 8 705 214      US-A1- 2014 200 071**

**Beschreibung**

Die Erfindung betrifft Vorrichtungen und Verfahren zur Bestimmung des Füllstands mindestens einer mit Münzen befüllbaren Münztube. Die Erfindung betrifft weiterhin eine Münzspeichervorrichtung zum Speichern und/oder Auszahlen von Münzen.

Beispielsweise Geldwechsler weisen in der Regel sogenannte Münztuben auf, in denen in dem Geldwechsler gespeicherte und von dem Geldwechsler auszuzahlende Münzen übereinander gestapelt gespeichert sind. Dabei ist für jeden Münztyp eine Münztube vorgesehen. Es besteht die Notwendigkeit, die Anzahl von Münzen in den Münztuben, also den Füllstand der Münztuben, im laufenden Betrieb zu ermitteln. Es ist bekannt, dies durch Vorsehen einer oder mehrerer Lichtschranken zu erreichen, die bei Überschreiten einer oder mehrerer Grenzhöhen in den Münztuben durch den Münzstapel unterbrochen werden. Nachteilig bei dieser Art der Füllstandsermittlung ist, dass nur diskrete Füllstandswerte ermittelt werden können. Befindet sich der Münzstapel mit seiner Höhe zwischen zwei Lichtschranken, so werden die zwischen den Lichtschranken befindlichen Münzen nicht erfasst. Damit bietet diese Technologie in der Praxis nicht immer eine ausreichende Genauigkeit.

Weiterhin ist für den angegebenen Zweck die Verwendung von Schall- bzw. Ultraschallsensoren bekannt, die die Laufzeit eines Ultraschallsignals von einem Sender bis zu der obersten Münze eines Münzstapels und zurück zu einem Empfänger messen. Anhand dieser Laufzeitmessung wird der Abstand zwischen dem Ultraschallsender bzw. -empfänger und der obersten Münze berechnet, woraus wiederum - bei bekannter Münzdicke - auf die Höhe des Münzstapels und damit auf die Anzahl von in der Münztube befindlichen Münzen geschlossen werden kann. Nachteilig an dieser Technologie ist die starke Abhängigkeit der Schallgeschwindigkeit und damit des Messergebnisses von der vorherrschenden Temperatur und Feuchtigkeit. Hinzu kommt, dass derartige Ultraschallsensoren einen großen Blindbereich haben, in dem aufgrund einer Überlappung der ausgesendeten und reflektierten Schallsignale keine zuverlässige Messung möglich ist. Dieser Blindbereich befindet sich in der Nähe des Schallsenders bzw. Schallempfängers. In der Praxis ist für eine zuverlässige Messung daher ein erheblicher Mindestabstand zwischen den Schallsendern bzw. Schallempfängern und der obersten Münze eines Münzstapels erforderlich, beispielsweise ein Abstand von ca. 2 cm. Dies wiederum begrenzt bei vorgegebenem Bauraum der Vorrichtung die Kapazität der Münztuben.

Darüber hinaus ist der Einsatz von Bildverarbeitungssystemen zum Identifizieren und Zählen von beispielsweise in Spielcasinos genutzten Wertmarken (Tokens) bekannt. Beispielhaft genannt seien insoweit US 6 425 817 B1, US 6 626 750 B2, US 7 481 702 B2 oder US 2014/0200071 A1. Einige dieser Druckschriften beschreiben bildgebende Verfahren, bei denen ein seitliches Bild eines Stapels von Wertmarken aufgenommen wird. Eine Bildverarbeitungssoftware identifiziert unterschiedliche in dem Stapel befindliche Wertmarken und ermittelt auf dieser Grundlage einen Gesamtwert des Stapels beispielsweise eines Spielers eines Spielcasinos. Die beschriebenen Verfahren setzen einen seitlichen Zugang der Bildsensoren zu den auszuwertenden Wertmarken voraus. Ein solcher seitlicher Zugang ist in der Praxis nicht immer gegeben. Darüber hinaus sind die beschriebenen Bildauswerteverfahren kompliziert und daher nicht immer zuverlässig.

Aus EP 1 990 778 A1 sind ein Verfahren und eine Vorrichtung zur Bestimmung des Füllstands einer mit Münzen befüllbaren Münztube bekannt, bei dem durch einen Strahlungssender ein Lichtstrahl auf den Münzstapel gerichtet wird und von einem Strahlungsempfänger ein von dem Münzstapel reflektierter Lichtstrahl empfangen wird. Eine Auswerteeinrichtung bestimmt die Höhe des Münzstapels mittels Triangulation.

Aus DE 40 41 078 A1 sind eine Vorrichtung und ein Verfahren zur Ermittlung des Füllstandes einer Münzstapelröhre bekannt mit einer in der Längsrichtung verschiebbaren Münzträgerplatte sowie am unteren und oberen Ende der Münzstapelröhre vorgesehenen Tastern, die mit einer Steuereinheit verbunden sind. Durch ein Verfahren der Münzträgerplatte vom unteren zum oberen Taster soll der Füllstand der Münzstapelröhre ermittelt werden.

Aus DE 10 2004 034 149 A1 ist ein Verfahren zum Betrieb eines Münzprüfer-Geldwechslers bekannt mit einer mehrere Münztuben aufweisenden Tubenkassette, der mindestens ein Leer- und ein Vollsensor für jede Münztube zugeordnet sind, wobei die Sensoren jeweils ein optisches Sendeelement und ein lichtempfindliches Empfangselement aufweisen, die auf der gleichen Seite der Münztuben angeordnet sind und das Licht des Sendeelements von einer Reflexionsfläche auf der gegenüberliegenden Seite der Münztuben zum lichtempfindlichen Empfangselement reflektiert wird. Eine elektronische Steuervorrichtung weist den jeweiligen Münztuben zugeordnete Tubenzähler auf, die die in die Münztuben eingegebenen und aus den Münztuben ausgegebenen Münzen zählen.

Aus DE 87 05 214 U1 ist eine Vorrichtung zum Sortieren und Verpacken von Münzen bekannt mit einer Anzahl von Röhren mit wenigstens teilweise durchsichtigem Wandbereich und wenigstens einer Marke pro Röhre, die im durchsichtigem Wandbereich angeordnet ist, so dass der Füllstand der Röhren beobachtet werden kann.

Aus DE 39 26 407 A1 ist schließlich eine Einrichtung zur Erfassung von Füllstandsänderungen in einem Münzbehälter bekannt, wobei der Füllstand in einem aus transparentem Material gefertigten Münzbehälter von einer gehäuseseitig angeordneten Kleinbildkamera erfasst wird.

Ausgehend von dem erläuterten Stand der Technik liegt der Erfindung die Aufgabe zugrunde, Vorrichtungen, Verfahren und eine Münzspeichervorrichtung der eingangs genannten Art bereitzustellen, mit denen eine genaue und zuverlässige Bestimmung des Füllstands von Münztuben bei maximierter Füllkapazität der Münztuben möglich ist.

Die Erfindung löst die Aufgabe nach einem ersten Aspekt durch die unabhängigen Ansprüche 1 und 13. Nach einem zweiten Aspekt löst die Erfindung die Aufgabe durch die unabhängigen Ansprüche 8 und 16. Vorteilhafte Ausgestaltungen finden sich in den abhängigen Ansprüchen, der Beschreibung und den Figuren.

Die Erfindung löst die Aufgabe nach dem ersten Aspekt durch ein Verfahren der eingangs genannten Art, umfassend die Schritte:

- Aufnehmen mindestens eines ortsaufgelösten Bildes der Oberseite der mindestens einen Münztube mit einem in einem definierten Abstand oberhalb der mindestens einen Münztube angeordneten, auf die Oberseite der mindestens einen Münztube gerichteten ortsauflösenden optischen Sensor,
- Übermitteln des mindestens einen ortsaufgelösten Bildes an eine Auswerteeinrichtung,
- Auswerten des mindestens einen ortsaufgelösten Bildes durch die Auswerteeinrichtung mittels Bildverarbeitung, wobei der Durchmesser der obersten in die Münztube gefüllten Münze auf dem ortsaufgelösten Bild ermittelt wird, und wobei aus dem Verhältnis zwischen dem Innen- oder Außendurchmesser der mindestens einen Münztube auf dem ortsaufgelösten Bild und dem ermittelten Durchmesser der obersten in die Münztube gefüllten Münze der Füllstand der mindestens einen Münztube bestimmt wird.

Weiterhin löst die Erfindung die Aufgabe nach dem ersten Aspekt durch eine Vorrichtung, umfassend:

- mindestens einen in einem definierten Abstand oberhalb der mindestens einen Münztube angeordneten, auf die Oberseite der mindestens einen Münztube gerichteten ortsauflösenden optischen Sensor zur Aufnahme mindestens eines ortsaufgelösten Bildes der Oberseite der mindestens einen Münztube,
- eine Auswerteeinrichtung, wobei der mindestens eine ortsauflösende optische Sensor zur Übermittlung des mindestens einen ortsaufgelösten Bildes mit der Auswerteeinrichtung verbunden ist,
- wobei die Auswerteeinrichtung dazu ausgebildet ist, das mindestens eine ortsaufgelöste Bild mittels Bildverarbeitung zur Ermittlung des Durchmessers der obersten in die Münztube gefüllten Münze auf dem ortsaufgelösten Bild auszuwerten, und wobei die Auswerteeinrichtung dazu ausgebildet ist, aus dem Verhältnis zwischen dem Innen- oder Außendurchmesser der mindestens einen Münztube auf dem ortsaufgelösten Bild und dem ermittelten Durchmesser der obersten in die Münztube gefüllten Münze den Füllstand der mindestens einen Münztube zu bestimmen.

Die mindestens eine Münztube kann insbesondere (kreis-)zylindrisch sein. Sie ist oben offen und die Münzen werden übereinander gestapelt in die Münztube gefüllt. Mindestens ein optischer Sensor sieht von oben, insbesondere senkrecht von oben in Axialrichtung der Münztube in die Münztube hinein. Dabei erfasst er insbesondere die sich in der Münztube befindenden Münzen. Außerdem kann er auch die in der Regel kreisförmige Öffnung der Münztube erfassen. Von dem optischen Sensor aufgenommene ortsaufgelöste Bilder werden an die Auswerteeinrichtung gesendet. Diese identifiziert anhand an sich bekannter Bildauswertealgorithmen die äußeren Begrenzungen der sich insbesondere farblich oder hinsichtlich des Kontrasts von der Münztube abhebenden obersten Münze und ermittelt dann ebenfalls anhand an sich bekannter Bildauswertealgorithmen den Durchmesser der sichtbaren obersten Münze auf dem ortsaufgelösten Bild. Es wird also nicht der tatsächliche Durchmesser der Münze ermittelt. Dieser ist ohnehin bekannt, da in jede Münztube regelmäßig nur ein Typ Münzen gefüllt wird. Vielmehr erfasst die Auswerteeinrichtung den Durchmesser der obersten Münze, wie er auf dem ortsaufgelösten Bild erscheint. Dieser Durchmesser ist abhängig von dem Abstand der Münze zu dem optischen Sensor. Je weiter weg die Münze ist, desto kleiner erscheint sie und damit ihr Durchmesser auf dem aufgenommenen ortsaufgelösten Bild.

Der so ermittelte Durchmesser der obersten Münze auf dem ortsaufgelösten Bild wird ins Verhältnis gesetzt zu dem Innen- oder Außendurchmesser der Münztube, ebenfalls wie er auf dem ortsaufgelösten Bild erscheint. Der Innendurchmesser ist der Durchmesser der Öffnung der Münztube. Der Außendurchmesser ist der Durchmesser der Außenwand der Münztube. Da sich der definierte Abstand des Sensors zu der Oberseite der Münztube nicht ändert, ist der Innen- oder Außendurchmesser der Münztube auf dem ortsaufgelösten Bild immer gleich. Das betrachtete Durchmesserverhältnis ändert sich also bei sich änderndem Abstand zwischen dem optischen Sensor und der obersten Münze.

Die Auswerteeinrichtung ermittelt insbesondere aus dem Verhältnis zwischen dem Innen- oder Außendurchmesser der mindestens einen Münztube auf dem ortsaufgelösten Bild einerseits und dem ermittelten Durchmesser der obersten in die Münztube gefüllten Münze andererseits den Abstand des mindestens einen ortsauflösenden Sensors zu der obersten in die Münztube gefüllten Münze und schließt daraus und unter Berücksichtigung der bekannten Dicke der in die vermessende Münztube gefüllten Münzen auf den Füllstand der mindestens einen Münztube.

Die Erfindung ermöglicht somit in auswertungstechnisch einfacher und zuverlässiger Weise ohne das Erfordernis eines seitlichen optischen Zugangs eine Füllstandserkennung, die unabhängig von äußeren Einflüssen, wie Temperatur, Feuchtigkeit oder Reflektivität der Münzen und Umgebungslicht ist. Ein relevanter Blindbereich, wie bei Ultraschallsensoren, existiert ebenfalls nicht, so dass die Füllkapazität der Münztuben maximiert werden kann. Bei entsprechender Auflösung der Bildsensoren ist eine hohe Genauigkeit der Füllstandermittlung möglich. Dabei ist sichergestellt, dass jede Münze in der untersuchten Münztube bei der Füllstandermittlung berücksichtigt wird.

Bei dem erfindungsgemäß genutzten mindestens einen ortsauflösenden Sensor kann es sich beispielsweise um eine ortsauflösende Kamera handeln. Insbesondere kann es sich um einen ortsauflösenden CCD-Sensor oder einen ortsauflösenden CMOS-Sensor handeln. Diese liefern eine hohe Auflösung und sind gleichzeitig kompakt und kostengünstig.

Soweit in der vorliegenden Anmeldung von Münzen bzw. Münztuben gesprochen wird, umfasst dies sowohl im regulären Zahlungsverkehr genutzte (Metall-)münzen als auch Sammlermünzen und beispielsweise im Gaming-Bereich in Spielautomaten und in Spielcasinos eingesetzte Wertmarken (Tokens), insbesondere Metall- oder Kunststoffwertmarken.

Der mindestens eine ortsauflösende Sensor und die Auswerteeinrichtung können getrennte Bauteile sein, wobei der mindestens eine ortsauflösende Sensor durch eine geeignete Leitung oder ähnliches mit der Auswerteeinrichtung verbunden ist. Es ist aber auch möglich, dass der mindestens eine ortsauflösende Sensor und die Auswerteeinrichtung in ein gemeinsames Bauteil integriert sind, in welchem dann auch die Verbindung des mindestens einen ortsauflösenden Sensors mit der Auswerteeinrichtung realisiert ist. Die in dieses gemeinsame Bauteil integrierte Auswerteeinrichtung kann dann direkt den ermittelten Abstand zu der obersten Münze oder den Füllstand ausgeben, beispielsweise an eine weitere Auswerteeinrichtung.

Nach einer bevorzugten Ausgestaltung kann vorgesehen sein, dass die Auswerteeinrichtung den Füllstand der mindestens einen Münztube aus dem Abstand des mindestens einen ortsauflösenden Sensors zu der obersten in die Münztube gefüllten Münze ermittelt, wobei der Abstand des mindestens einen ortsauflösenden Sensors zu der obersten in die Münztube gefüllten Münze unter Berücksichtigung des definierten Abstands des mindestens einen ortsauflösenden Sensors zu der Oberseite der mindestens einen Münztube ermittelt wird, insbesondere nach der Gleichung:

$$a = \frac{A \cdot D}{d}$$

wobei gilt:

*a:* Abstand des mindestens einen ortsauflösenden Sensors zu der obersten in die Münztube gefüllten Münze,

*A:* Abstand des mindestens einen ortsauflösenden Sensors zu der Oberseite der mindestens einen Münztube,

*d:* Durchmesser der obersten in die Münztube gefüllten Münze auf dem ortsaufgelösten Bild,

*D:* Innen- oder Außendurchmesser der mindestens einen Münztube auf dem ortsaufgelösten Bild.

Diese Ausgestaltung bietet eine besonders einfache rechnerische Ermittlung des Abstands zwischen dem mindestens einen optischen Sensor und der obersten Münze und daraus die Ermittlung des Füllstands der jeweiligen Münztube unter Berücksichtigung der bekannten Dicke der Münzen in der Münztube.

Nach einer weiteren Ausgestaltung kann vorgesehen sein, dass der definierte Abstand des mindestens einen ortsauflösenden Sensors zu der Oberseite der mindestens einen Münztube und/oder der Innen- oder Außendurchmesser der mindestens einen Münztube auf dem ortsaufgelösten Bild in einem Speicher der Auswerteeinrichtung hinterlegt ist, und dass die Auswerteeinrichtung den in dem Speicher hinterlegten Abstand und/oder den in dem Speicher hinterlegten Innen- oder Außendurchmesser bei der Ermittlung des Füllstands der mindestens einen Münztube nutzt. Da sich die genannten beiden Werte bei unterschiedlichem Füllstand der Münztube nicht ändern, ist es nicht erforderlich, sie bei jedem Messvorgang messtechnisch zu ermitteln. Vielmehr können diese Werte einmalig, beispielsweise im Rahmen einer Kalibrierung, ermittelt werden und in einem Speicher der Auswerteeinrichtung hinterlegt und bei jedem Messvorgang für die Berechnung des Füllstandes aus dem Speicher ausgelesen werden. Dies vereinfacht die erfindungsgemäße Auswertung weiter.

Es ist aber auch denkbar, dass das von dem mindestens einen ortsauflösenden optischen Sensor aufgenommene mindestens eine ortsaufgelöste Bild auch den Innen- oder Außendurchmesser der Münztube umfasst, und dass die Auswerteeinrichtung den bei der Ermittlung des Füllstands der mindestens einen Münztube genutzten Innen- oder Außendurchmesser der mindestens einen Münztube auf dem ortsaufgelösten Bild ebenfalls mittels Bildverarbeitung des mindestens einen ortsaufgelösten Bildes ermittelt.

Mit steigendem Abstand des optischen Sensors zu der obersten Münze, also mit sinkendem Füllstand, wird der ermittelte Durchmesser der obersten Münze auf dem ortsaufgelösten Bild immer kleiner. Dies kann beispielsweise bei Abständen von 10 cm und mehr zu Problemen führen, wenn die Auflösung der verwendeten Bildsensoren nicht ausreichend ist. Insbesondere bei hohen Münztuben mit großer Münzkapazität müssen also hochauflösende Bildsensoren eingesetzt werden. Alternativ oder zusätzlich kann dem mindestens einen ortsauflösenden Sensor eine Fischaugen-Linse (fish eye lens) vorgeschaltet sein. Fischaugen-Linsen vergrößern den zentralen Bereich des aufgenommen Bildes im Vergleich zu den äußeren Bereichen des Bildes. Damit können auch bei größeren Abständen zu der obersten Münze ausreichend große Durchmesser der auf dem Bild erscheinenden obersten Münze erzeugt werden. Andererseits verkompliziert sich hierdurch jedoch die Abstandsbestimmung.

Mit dem erfindungsgemäßen Verfahren bzw. der erfindungsgemäßen Vorrichtung kann der Füllstand einer Mehrzahl von Münztuben ermittelt werden. Die unterschiedlichen Münztuben werden dann üblicherweise mit unterschiedlichen Münzen befüllt, wobei jeder Münztube genau ein Münztyp zum Befüllen zugeordnet ist. Für jede der Münztuben kann dann insbesondere die oben beispielhaft für mindestens eine Münztube erläuterte Messung und Auswertung erfolgen.

Es ist dann weiter möglich, dass jeder Münztube ein eigener, jeweils in einem definierten Abstand oberhalb der jeweiligen Münztube angeordneter, auf die Oberseite der jeweiligen Münztube gerichteter ortsauflösender optischer Sensor zugeordnet ist, wobei jeder der ortsauflösenden optischen Sensoren mindestens ein ortsaufgelöstes Bild der Oberseite der jeweiligen Münztube aufnimmt, jedes der ortsaufgelösten Bilder an die Auswerteeinrichtung übermittelt wird, und die Auswerteeinrichtung jedes der aufgenommenen ortsaufgelösten Bilder mittels Bildverarbeitung auswertet, wobei jeweils der Durchmesser der obersten in die jeweilige Münztube gefüllten Münze auf dem ortsaufgelösten Bild ermittelt wird, und wobei aus dem Verhältnis zwischen dem Innen- oder Außendurchmesser der jeweiligen Münztube auf dem ortsaufgelösten Bild und dem jeweils ermittelten Durchmesser der obersten in die Münztube gefüllten Münze der Füllstand der jeweiligen Münztube bestimmt wird. Die vorgenannte Ausgestaltung erfordert allerdings eine Mehrzahl von optischen Sensoren. Dies kann nicht zuletzt aus Kostengründen unerwünscht sein.

Entsprechend ist es auch möglich, dass mehreren oder sämtlichen der Münztuben ein gemeinsamer, jeweils in einem definierten Abstand oberhalb der jeweiligen Münztube angeordneter, auf die Oberseite der jeweiligen Münztube gerichteter ortsauflösender optischer Sensor zugeordnet ist, wobei der gemeinsame ortsauflösende optische Sensor jeweils mindestens ein ortsaufgelöstes Bild der Oberseite der zugeordneten Münztuben aufnimmt, jedes der ortsaufgelösten Bilder an die Auswerteeinrichtung übermittelt wird, und die Auswerteeinrichtung jedes der aufgenommenen ortsaufgelösten Bilder mittels Bildverarbeitung auswertet, wobei jeweils der Durchmesser der obersten in die jeweilige Münztube gefüllten Münze auf dem ortsaufgelösten Bild ermittelt wird, und wobei aus dem Verhältnis zwischen dem Innen- oder Außendurchmesser der jeweiligen Münztube auf dem ortsaufgelösten Bild und dem jeweils ermittelten Durchmesser der obersten in die Münztube gefüllten Münze der Füllstand der jeweiligen Münztube bestimmt wird.

Nach einer weiteren Ausgestaltung kann der den mehreren oder sämtlichen der Münztuben zugeordnete gemeinsame ortsauflösende optische Sensor jeweils über einen Lichtwellenleiter optisch mit den Münztuben verbunden sein. Dadurch kann der gemeinsame optische Sensor in besonders einfacher und zuverlässiger Weise von jeder der Münztuben ein ortsaufgelöstes Bild aufnehmen. Es wird dabei das Endoskop-Prinzip genutzt. Jeder der Lichtwellenleiter, beispielsweise jeweils eine Glasfaser, wird dann so oberhalb der jeweiligen Münztube platziert, dass der gemeinsame optische Sensor von jeder der Münztuben ein ortsaufgelöstes Bild aufnimmt. Den jeweiligen Lichtwellenleitern können zusätzlich, wie oben beschrieben, Fischaugenlinsen vorgeschaltet sein, insbesondere im Bereich oberhalb der jeweiligen Münztube.

Es ist möglich, dass der den mehreren oder sämtlichen der Münztuben zugeordnete gemeinsame ortsauflösende optische Sensor die ortsaufgelösten Bilder der Oberseiten der zugeordneten Münztuben nacheinander aufnimmt. Es ist aber auch möglich, dass der den mehreren oder sämtlichen der Münztuben zugeordnete gemeinsame ortsauflösende optische Sensor die ortsaufgelösten Bilder der Oberseiten der zugeordneten Münztuben gleichzeitig aufnimmt, wobei die ortsaufgelösten Bilder auf unterschiedlichen Bereichen des Bildsensors des optischen Sensors aufgenommen werden. Bei der letztgenannten Ausgestaltung wird die Sensorfläche des optischen Sensors in unterschiedliche Bereiche aufgeteilt, wobei beispielsweise die Lichtwellenleiter so zu den einzelnen Bereichen ausgerichtet sind, dass jeder Bereich das ortsaufgelöste Bild genau einer der Münztuben aufnimmt. Die Auswerteeinrichtung kann diese Messsignale dann im Zuge der Auswertung voneinander trennen und insbesondere die einzelnen ortsaufgelösten Bilder in dem Gesamtmesssignal des optischen Sensors diskriminieren und den einzelnen Münztuben für die Füllstandermittlung zuordnen.

Die erfindungsgemäße Vorrichtung ist insbesondere geeignet und ausgebildet zur Durchführung des Verfahrens. Dies gilt insbesondere für den mindestens einen optischen Sensor und die Auswerteeinrichtung. Entsprechend kann das erfindungsgemäße Verfahren mit der erfindungsgemäßen Vorrichtung durchgeführt werden.

Die Erfindung löst die Aufgabe nach dem zweiten Aspekt durch ein Verfahren zur Bestimmung des Füllstands mindestens einer mit Münzen befüllbaren Münztube, die an ihrer Innenwand eine oder mehrere Markierungen aufweist, umfassend die Schritte:

- Aufnehmen mindestens eines ortsaufgelösten Bildes der Oberseite der mindestens einen Münztube mit einem in einem definierten Abstand oberhalb der mindestens einen Münztube angeordneten, auf die Oberseite der mindestens einen Münztube gerichteten ortsauflösenden optischen Sensor,
- Übermitteln des mindestens einen ortsaufgelösten Bildes an eine Auswerteeinrichtung,
- Auswerten des mindestens einen ortsaufgelösten Bildes durch die Auswerteeinrichtung mittels Bildverarbeitung, wobei eine oder mehrere von in die mindestens eine Münztube gefüllten Münzen nicht verdeckte Markierungen an der Innenwand der mindestens einen Münztube identifiziert werden und daraus der Füllstand der mindestens einen Münztube bestimmt wird.

Außerdem löst die Erfindung die Aufgabe nach dem zweiten Aspekt durch eine Vorrichtung zur Bestimmung des Füllstands mindestens einer mit Münzen befüllbaren Münztube, die an ihrer Innenwand eine oder mehrere Markierungen aufweist, umfassend:

- mindestens einen in einem definierten Abstand oberhalb der mindestens einen Münztube angeordneten, auf die Oberseite der mindestens einen Münztube gerichteten ortsauflösenden optischen Sensor zur Aufnahme mindestens eines ortsaufgelösten Bildes der Oberseite der mindestens einen Münztube,
- eine Auswerteeinrichtung, wobei der mindestens eine ortsauflösende optische Sensor zur Übermittlung des mindestens einen ortsaufgelösten Bildes mit der Auswerteeinrichtung verbunden ist,
- wobei die Auswerteeinrichtung dazu ausgebildet ist, das mindestens eine ortsaufgelöste Bild mittels Bildverarbeitung zur Identifizierung einer oder mehrerer von in die mindestens eine Münztube gefüllten Münzen nicht verdeckter Markierungen an der Innenwand der mindestens einen Münztube auszuwerten, und wobei die Auswerteeinrichtung dazu ausgebildet ist, daraus der Füllstand der mindestens einen Münztube zu bestimmen.

Die mindestens eine Münztube kann ausgestaltet sein wie oben zu dem ersten Aspekt der Erfindung erläutert. Sie kann insbesondere wiederum (kreis-)zylindrisch sein. Sie ist oben offen und die Münzen werden übereinander gestapelt in die Münztube gefüllt. Auch der mindestens eine optische Sensor kann ausgestaltet sein wie oben zu dem ersten Aspekt der Erfindung erläutert. Insbesondere sieht der mindestens eine optische Sensor wiederum von oben, insbesondere senkrecht von oben, in Axialrichtung der Münztube in die Münztube hinein. Dabei erfasst er insbesondere die sich in der Münztube befindenden Münzen. Außerdem kann er auch die in der Regel kreisförmige Öffnung der Münztube erfassen. Aufgrund der Perspektive erfasst der mindestens eine optische Sensor darüber hinaus die Innenwand der mindestens einen Münztube, wo diese nicht von in der Münztube befindlichen Münzen verdeckt ist. Wiederum werden die von dem mindestens einen optischen Sensor aufgenommenen ortsaufgelösten Bilder an die Auswerteeinrichtung gesendet.

Die Auswerteeinrichtung identifiziert die in dem nicht von Münzen verdeckten Bereich der Innenwand der mindestens einen Münztube sichtbaren und von dem mindestens einen optischen Sensor aufgenommene(n) Markierung(en) und bestimmt anhand der identifizierten einen oder mehreren Markierungen die Füllhöhe der mindestens einen Münztube mit Münzen und daraus wiederum unter Berücksichtigung der bekannten Dicke der in die jeweilige Münztube gefüllten Münzen den Füllstand der mindestens einen Münztube. Die Auswertung der Füllhöhe und damit des Füllstands ist bei diesem zweiten Aspekt der Erfindung weiter vereinfacht. Durch eine möglichst durchgehende Abdeckung der Innenwand durch die optische(n) Markierung(en) kann wiederum sichergestellt werden, dass jede in die Münztube gefüllte Münze erfasst wird. Es ergeben sich im Übrigen dieselben Vorteile wie bei dem ersten Aspekt der Erfindung, nämlich insbesondere Unabhängigkeit von äußeren Einflüssen, hohe Zuverlässigkeit bei der Füllstandsermittlung in einfacher Weise unter Vermeidung eines relevanten Blindbereichs.

Wiederum kann es sich bei dem genutzten mindestens einen ortsauflösenden Sensor um eine ortsauflösende Kamera handeln, insbesondere einen ortsauflösenden CCD-Sensor oder einen ortsauflösenden CMOS-Sensor.

Die Markierungen können nach einer besonders praxisgemäßen Ausgestaltung mehrere in Axialrichtung der Münztube beabstandete, senkrecht zur Axialrichtung der mindestens einen Münztube verlaufende Linien an der Innenwand der mindestens einen Münztube umfassen.

Nach einer alternativen oder zusätzlichen Ausgestaltung kann die optische Markierung mindestens eine spiralförmig entlang der Innenwand der mindestens einen Münztube verlaufende Linie umfassen.

Dem mindestens einen ortsauflösenden Sensor kann wiederum zur Erhöhung der Auflösung eine Fischaugen-Linse vorgeschaltet sein.

Wiederum kann mit dem Verfahren bzw. der Vorrichtung nach dem zweiten Aspekt der Füllstand einer Mehrzahl von Münztuben ermittelt werden. Es ist dann möglich, dass jeder der Münztuben ein eigener jeweils in einem definierten Abstand oberhalb der jeweiligen Münztube angeordneter, auf die Oberseite der jeweiligen Münztube gerichteter ortsauflösender optischer Sensor zugeordnet ist, wobei jeder der ortsauflösenden optischen Sensoren mindestens ein ortsaufgelöstes Bild der Oberseite der jeweiligen Münztube aufnimmt, jedes der ortsaufgelösten Bilder an die Auswerteeinrichtung übermittelt wird, und durch die Auswerteeinrichtung mittels Bildverarbeitung ausgewertet wird, wobei jeweils eine oder mehrere von in die jeweilige Münztube gefüllten Münzen nicht verdeckte Markierungen an der Innenwand der jeweiligen Münztube identifiziert werden und daraus der Füllstand der mindestens einen Münztube bestimmt wird.

Wiederum ist es jedoch auch möglich, dass mehreren oder sämtlichen der Münztuben ein gemeinsamer, jeweils in einem definierten Abstand oberhalb der jeweiligen Münztube angeordneter, auf die Oberseite der jeweiligen Münztube gerichteter ortsauflösender optischer Sensor zugeordnet ist, wobei der gemeinsame ortsauflösende optische Sensor mindestens ein ortsaufgelöstes Bild der Oberseite der zugeordneten Münztuben aufnimmt, jedes der ortsaufgelösten Bilder an die Auswerteeinrichtung übermittelt wird und durch die Auswerteeinrichtung mittels Bildverarbeitung ausgewertet wird, wobei jeweils eine oder mehrere von in die mindestens eine Münztube gefüllten Münzen nicht verdeckte Markierungen an der Innenwand der jeweiligen Münztube identifiziert werden und daraus der Füllstand der jeweiligen Münztube bestimmt wird.

Weiterhin kann wiederum der den mehreren oder sämtlichen der Münztuben zugeordnete gemeinsame ortsauflösende optische Sensor jeweils über einen Lichtwellenleiter optisch mit den Münztuben verbunden sein. Wiederum können den jeweiligen Lichtwellenleitern zusätzlich, wie oben beschrieben, Fischaugenlinsen vorgeschaltet sein, insbesondere im Bereich oberhalb der jeweiligen Münztube.

Der den mehreren oder sämtlichen der Münztuben zugeordnete gemeinsame ortsauflösende optische Sensor kann wiederum die ortsaufgelösten Bilder der Oberseiten der zugeordneten Münztuben gleichzeitig aufnehmen, wobei die ortsaufgelösten Bilder auf unterschiedlichen Bereichen des Bildsensors des optischen Sensors aufgenommen werden. Natürlich ist es wiederum auch möglich, dass der den mehreren oder sämtlichen der Münztuben zugeordnete gemeinsame ortsauflösende optische Sensor die ortsaufgelösten Bilder der Oberseiten der zugeordneten Münztuben nacheinander aufnimmt.

Auch die Vorrichtung nach dem zweiten Aspekt der Erfindung, insbesondere der mindestens eine optische Sensor bzw. die Auswerteeinrichtung, kann zur Durchführung des Verfahrens nach dem zweiten Aspekt geeignet sein. Entsprechend kann das Verfahren nach dem zweiten Aspekt der Erfindung mit der Vorrichtung nach dem zweiten Aspekt der Erfindung durchgeführt werden. Auch ist es möglich, Ausgestaltungen nach dem ersten Aspekt der Erfindung und nach dem zweiten Aspekt der Erfindung miteinander zu kombinieren.

Die Erfindung betrifft außerdem eine Münzspeichervorrichtung zum Speichern und/oder Auszahlen von Münzen, umfassend eine oder mehrere mit Münzen befüllbare Münztuben und umfassend eine erfindungsgemäße Vorrichtung nach dem ersten und/oder zweiten Aspekt der Erfindung. Bei der Münzspeichervorrichtung kann es sich insbesondere um einen Geldwechsler handeln, der beispielsweise in Bezahlautomaten zum Einsatz kommt. Er besitzt einen Münzeinlass, durch den Münzen einer Münzprüfeinrichtung des Geldwechslers zugeführt werden. In der Münzprüfeinrichtung werden die Echtheit und der Typ der jeweils zugeführten Münzen bestimmt. Abhängig von dem Prüfergebnis werden die Münzen dann in die für den jeweiligen Münztyp vorgesehenen Münztuben gefüllt oder bei fehlender Echtheit einem Auslass zugeführt. Die Münztuben befinden sich dabei in der Regel unterhalb der Münzprüfeinrichtung. Die erfindungsgemäßen optischen Strahlungssender und optischen Strahlungsempfänger sowie die Steuer- und Auswerteeinrichtung können dann in die Münzprüfeinrichtung integriert sein.

Nach einer diesbezüglichen weiteren Ausgestaltung kann vorgesehen sein, dass die Auswerteeinrichtung bei Vorhandensein einer Mehrzahl von Münztuben anhand von für die einzelnen Münztuben bestimmten Füllständen eine Auszahlung von Münzen aus den Münztuben derart ausführt, dass die Füllstände in den Münztuben einen jeweils vorgegebenen Minimalwert nicht unterschreiten. Es erfolgt also ein intelligentes Münzmanagement aufgrund der Messergebnisse der erfindungsgemäßen Sensorik. Durch Ausgabe bestimmter Münzen kann der Münzwechsler die Füllstände der einzelnen Münztuben in gewissen Grenzen so beeinflussen, dass jederzeit von jedem Münztyp ausreichend Münzen vorhanden sind. Unterschreitet die Anzahl von Münzen in einer der Münztuben dennoch den vorgegebenen Minimalwert, kann der Münzwechsler ein Warnsignal ausgeben.

Ausführungsbeispiele der Erfindung werden nachfolgend anhand von Figuren näher erläutert. Es zeigen schematisch:

Fig. 1    eine erfindungsgemäße Vorrichtung nach dem ersten Aspekt der Erfindung in einer Schnittansicht,

Fig. 2    im linken Abschnitt die Darstellung aus Fig. 1 bei maximal mit Münzen befüllter Münztube und im rechten Abschnitt eine Darstellung des von einem optischen Sensor der Vorrichtung aufgenommenen Bildes bei dem im linken Abschnitt dargestellten Füllstand,

Fig. 3    im linken Abschnitt die Darstellung aus Fig. 1 bei minimal mit Münzen befüllter Münztube und im rechten Abschnitt eine Darstellung des von einem optischen Sensor der Vorrichtung aufgenommenen Bildes bei dem im linken Abschnitt dargestellten Füllstand,

Fig. 4    ein Diagramm zur Veranschaulichung des Zusammenhangs zwischen dem auf dem ortsaufgelösten Bild erscheinenden Durchmesser der obersten Münze einer Münztube und dem Abstand des mindestens einen optischen Sensors zu der obersten Münze,

Fig. 5    ein von dem mindestens einen optischen Sensor aufgenommenes ortsaufgelöstes Bild gemäß einer ersten Ausgestaltung nach dem zweiten Aspekt der Erfindung,

Fig. 6    ein von dem mindestens einen optischen Sensor aufgenommenes ortsaufgelöstes Bild gemäß einer zweiten Ausgestaltung nach dem zweiten Aspekt der Erfindung,

Fig. 7    eine erfindungsgemäße Münzspeichervorrichtung zum Speichern und/oder Auszahlen von Münzen in einem zur Veranschaulichung demontierten Zustand in einer teilweise transparenten perspektivischen Darstellung, und

Fig. 8    eine teilweise Darstellung einer weiteren Ausgestaltung einer erfindungsgemäßen Münzspeichervorrichtung.

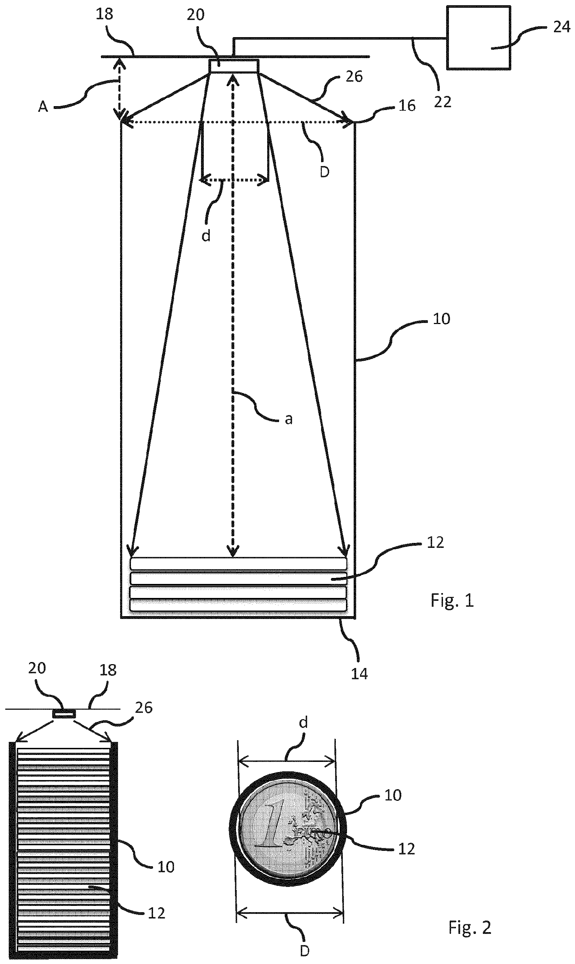

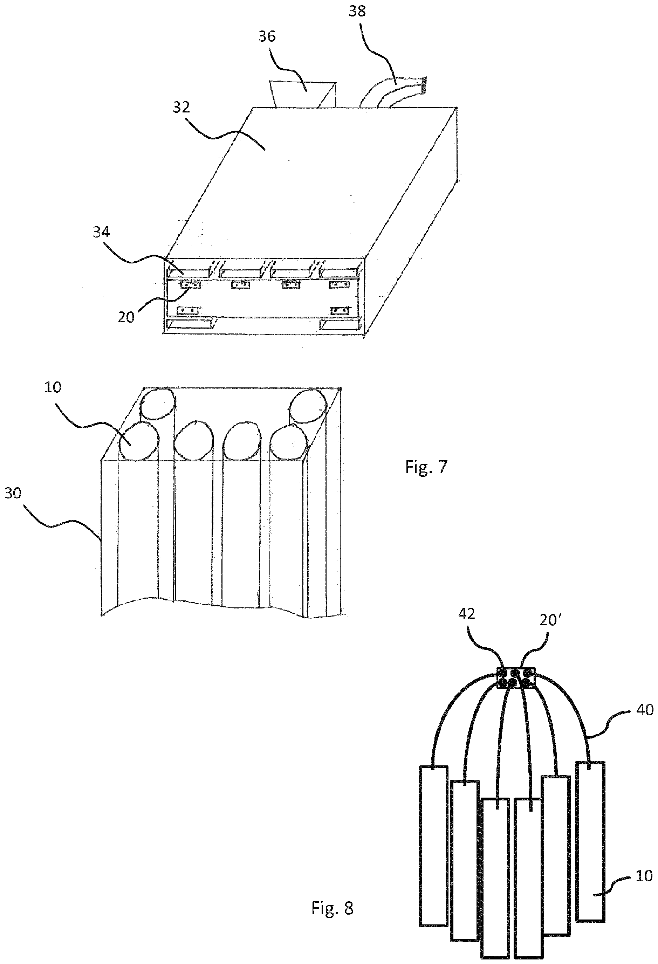

Soweit nichts anderes angegeben ist, bezeichnen in den Figuren gleiche Bezugszeichen gleiche Gegenstände. In Fig. 1 ist bei dem Bezugszeichen 10 eine Münztube gezeigt, die beispielsweise in einer Münzspeichervorrichtung zum Speichern und/oder Auszahlen von Münzen, wie in Fig. 7 gezeigt, zum Einsatz kommen kann. In der Münztube 10 befinden sich mehrere, in dem dargestellten Beispiel vier Münzen 12, insbesondere auf dem Boden 14 der Münztube 10 gestapelt. Oberhalb des oben offenen Endes 16 der Münztube 10 befindet sich an einer Halteplatte 18 gehalten ein ortsauflösender optischer Sensor 20, beispielsweise ein CCD-Sensor oder CMOS-Sensor. Über eine Leitung 22 ist der optische Sensor 20 mit einer Auswerteeinrichtung 24 der Vorrichtung verbunden.

Im Betrieb nimmt der optische Sensor 20, beispielsweise angesteuert durch die Auswerteeinrichtung 24, ein ortsaufgelöstes Bild der Oberseite der Münztube 10 auf. Dabei erfasst der optische Sensor 20 auch die Außenwand der Münztube 10 und insbesondere den Innendurchmesser D der Münztube 10, wie in Fig. 1 durch die Pfeile 26 veranschaulicht. Der optische Sensor 20 ist in einem definierten Abstand A zu der Oberseite der Münztube 10 angeordnet. Zu der obersten Münze 12 in Fig. 1 hat der optische Sensor 20 einen Abstand a. Der Durchmesser der obersten Münze 12 erscheint auf dem aufgenommenen ortsaufgelösten Bild in einer Größe, die von dem Abstand a abhängt. In Fig. 1 ist dieser auf dem ortsaufgelösten Bild erscheinende Durchmesser der obersten Münze 12 mit d gekennzeichnet.

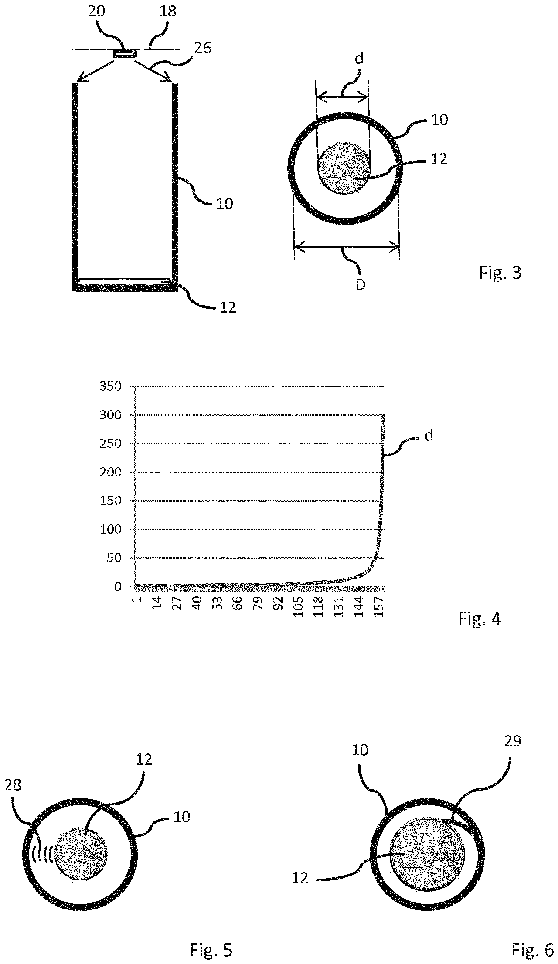

In den Figuren 2 und 3 ist die Vorrichtung aus Fig. 1 bei anderen Füllständen der Münztube 10 gezeigt, wobei aus Veranschaulichungsgründen die Auswerteeinrichtung 24 nicht dargestellt ist. In Fig. 2 ist eine vollständig befüllte Münztube 10 gezeigt und in Fig. 3 eine nur mit einer Münze 12 befüllte Münztube 10. Im rechten Teil der Figuren 2 und 3 ist jeweils das von dem optischen Sensor 20 aufgenommene ortsaufgelöste Bild dargestellt. Gut erkennbar ist die unterschiedliche auf dem Bild erscheinende Größe der obersten Münze 12, abhängig von dem Abstand a.

Der Zusammenhang zwischen dem auf dem ortsaufgelösten Bild erscheinenden Durchmesser d der obersten Münze 12 und dem Abstand a zwischen dem optischen Sensor 20 und der obersten Münze 12 ist in Fig. 4 veranschaulicht. Das Diagramm zeigt Messwerte des Durchmessers d beispielhaft für einen Münztubendurchmesser von 30 mm und eine Münztubenhöhe von 160 mm. Auf der Abszisse des Diagramms in Fig. 4 ist aufgetragen (160-a) in mm. Auf der Ordinate ist (d) in mm aufgetragen. Es ist erkennbar, dass der auf dem Bild erscheinende Durchmesser d der Münze mit geringer werdendem Abstand a stark ansteigt.

Das von dem optischen Sensor 20 bei der erfindungsgemäßen Vorrichtung nach den Figuren 1 bis 4 aufgenommene ortsaufgelöste Bild wird über die Leitung 22 an die Auswerteeinrichtung 24 übermittelt. Die Auswerteeinrichtung 24 bestimmt mittels an sich bekannter Bildverarbeitungsalgorithmen den Durchmesser d der obersten in die Münztube 10 gefüllten Münze 12, wie er auf dem ortsaufgelösten Bild erscheint. Der definierte Abstand A des optischen Sensors 20 zu der Oberseite 16 der Münztube 10 ist bekannt und in einem Speicher der Auswerteeinrichtung 24 hinterlegt. Er ändert sich nicht mit sich änderndem Füllstand der Münztube 10. Gleiches gilt für den in diesem Beispiel herangezogenen Innendurchmesser D der Münztube 10. Dieser Wert ist ebenfalls in einem Speicher der Auswerteeinrichtung 24 hinterlegt. Aus den beiden im Speicher hinterlegten Werten A und D und dem aus dem ortsaufgelösten Bild ermittelten Wert d ermittelt die Auswerteeinrichtung 24 nun den Abstand a des optischen Sensors 20 zu der obersten Münze 12 nach der Gleichung:

$$a = \frac{A \cdot D}{d}$$

Da die Dicke der in die Münztube 10 gefüllten Münzen 12 bekannt ist, kann die Auswerteeinrichtung 24 hieraus unmittelbar den Füllstand der Münztube 10 mit Münzen bestimmen.

Fig. 5 zeigt ein von dem optischen Sensor 20 aufgenommenes ortsaufgelöstes Bild nach dem zweiten Aspekt der Erfindung. Bei diesem Ausführungsbeispiel sind an der Innenwand der Münztube 10 mehrere in Axialrichtung der Münztube 10 beabstandete, jeweils senkrecht zur Axialrichtung der Münztube 10 verlaufende Linien 28 als Füllstandsmarkierungen vorgesehen. Der optische Sensor 20, der im Übrigen insbesondere ausgestaltet sein kann wie oben zu Fig. 1 erläutert, nimmt abhängig von dem Füllstand der Münztube 10 mit Münzen 12 den jeweils nicht verdeckten Teil der Innenwand der Münztube 10 und damit die nicht verdeckten Markierungen 28 auf.

In Fig. 6 ist ein weiteres diesbezügliches Ausführungsbeispiel gezeigt, welches dem Ausführungsbeispiel nach Fig. 5 entspricht bis auf die Tatsache, dass bei dem Ausführungsbeispiel der Fig. 6 anstelle der Linien 28 eine sich über die Innenwand der Münztube 10 spiralförmig erstreckende Linie 29 vorgesehen ist, die wiederum abhängig von dem Füllstand der Münztube 10 mit Münzen 12 von dem optischen Sensor 20 aufgenommen wird.

Bei beiden Ausführungsbeispielen der Figuren 5 und 6 wird das von dem optischen Sensor 20 aufgenommene ortsaufgelöste Bild wiederum über die Leitung 22 an die Auswerteeinrichtung 24 übermittelt, wobei die Auswerteeinrichtung 24 bei diesem Ausführungsbeispiel anhand der von den Münzen 12 nicht verdeckten Linien 28 bei dem Ausführungsbeispiel der Fig. 5 bzw. anhand des von den Münzen 12 nicht verdeckten Abschnitts der spiralförmigen Linie 29 bei dem Ausführungsbeispiel der Fig. 6 den Füllstand der Münztube 10 mit Münzen 12 ermittelt. Auch eine Kombination beider Markierungsarten ist möglich.

Fig. 7 zeigt eine erfindungsgemäße Münzspeichervorrichtung zum Speichern und Auszahlen von Münzen, insbesondere einen Geldwechsler, wie er beispielsweise in Bezahlautomaten zum Einsatz kommt. Die Münzspeichervorrichtung kann sowohl in Verbindung mit der Ausgestaltung der in den Figuren 1 bis 3 gezeigten Vorrichtung als auch in Verbindung mit den in den Figuren 5 und 6 gezeigten Ausgestaltungen eingesetzt werden. Die in Fig. 7 gezeigte Münzspeichervorrichtung besteht im Wesentlichen aus zwei Gehäuseteilen, die in Fig. 7 aus Gründen der Veranschaulichung demontiert gezeigt sind. In einem unteren Gehäuseteil 30 sind in dem gezeigten Beispiel sechs Münztuben 10 aufrechtstehend verteilt angeordnet. Die Münztuben 10 sind jeweils beispielsweise so ausgestaltet wie in den Figuren 1 bis 3 bzw. 5 oder 6 gezeigt und werden mit unterschiedlichen Münztypen befüllt, wobei in jede der Münztuben 10 in Fig. 7 jeweils nur ein Münztyp gefüllt wird, wie dies in den Figuren 1 bis 3 bzw. 5 und 6 anhand einer Münztube 10 gezeigt ist.

In einem Gehäuseoberteil 32 der Münzspeichervorrichtung befindet sich eine Münzprüfeinrichtung. Im Betrieb wird das Gehäuseoberteil 32 mit der in Fig. 7 stirnseitig erkennbaren Unterseite auf die Oberseite des Gehäuseunterteils 30 aufgesetzt. An der Unterseite des Gehäuseoberteils 32 ist jeweils ein Münzschlitz 34 zu einer der Münztuben 10 ausgerichtet. An seiner Oberseite weist das Gehäuseoberteil 32 einen Münzeinlass 36 auf, durch den der Münzspeichervorrichtung und insbesondere zunächst der in dem Gehäuseoberteil 32 angeordneten Münzprüfeinrichtung Münzen zugeführt werden. Die Münzprüfeinrichtung untersucht die zugeführten Münzen auf Echtheit und Münztyp und leitet diese - bei vorliegender Echtheit - abhängig von ihrem Typ über die Münzschlitze 34 jeweils einer der Münztuben 10 zu. Die Münzschlitze 34 bilden also Sortierausgänge der Münzprüfeinrichtung. An der Oberseite des Gehäuseoberteils 32 befindet sich außerdem noch ein beispielsweise manuell betätigbarer Rückgabehebel 38, über den beispielsweise bei einer Münzblockade der Münzprüfeinrichtung zugeführte Münzen ausgegeben werden können.

Jeweils benachbart zu einem der Münzschlitze 34 befindet sich jeweils ein optischer Sensor 20, wie er beispielhaft anhand der Figuren 1 bis 3 bzw. 5 und 6 erläutert wurde. Im auf das Gehäuseunterteil 30 bestimmungsgemäß aufgesetzten Zustand des Gehäuseoberteils 32 sind die optischen Sensoren 20 jeweils so zu einer der Münztuben 10 ausgerichtet, wie dies beispielhaft in Fig. 1 für einen Sensor 20 und eine Münztube 10 dargestellt ist. Jeder der optischen Sensoren 20 ist dabei mit der Auswerteeinrichtung 24 verbunden, die in dem in Fig. 7 gezeigten Ausführungsbeispiel innerhalb des Gehäuseoberteils 32 angeordnet ist.

Im Betrieb nehmen die optischen Sensoren 20, beispielsweise angesteuert durch die Auswerteeinrichtung 24, jeweils ein ortsaufgelöstes Bild der ihnen zugeordneten Münztube 10 auf, wie dies in Fig. 1 anhand einer Münztube 10 beispielhaft gezeigt ist. Die aufgenommenen Bilder werden wiederum an die Auswerteeinrichtung 24 geleitet, wobei die Auswerteeinrichtung 24 daraus den Füllstand der jeweiligen Münztube 10 ermittelt, und zwar beispielsweise nach dem anhand der Figuren 1 bis 4 erläuterten ersten Aspekt der Erfindung oder nach dem anhand der Figuren 5 und 6 erläuterten zweiten Aspekt der Erfindung.

Fig. 8 zeigt eine abgewandelte Variante, wie sie bei der in Fig. 7 gezeigten Münzspeichervorrichtung zum Einsatz kommen kann. Aus Gründen der Veranschaulichung sind in Fig. 8 nur äußerst schematisch die Münztuben 10 und ein den Münztuben 10 zugeordneter gemeinsamer optischer Sensor 20' gezeigt. Der gemeinsame optische Sensor 20' ist über jeweils einen Lichtwellenleiter 40 mit jeweils einer der Münztuben 10 optisch verbunden und zwar derart, dass der optische Sensor 20' über den jeweiligen Lichtwellenleiter 40 jeweils ein ortsaufgelöstes Bild der Oberseite der jeweiligen Münztube 10 aufnimmt, wie in den Figuren 1 bis 3 bzw. 5 und 6 grundsätzlich dargestellt. Darüber hinaus wird das über jeden der Lichtwellenleiter 40 aufgenommene ortsaufgelöste Bild von einem definierten Teilbereich 42 der Gesamtsensorfläche des optischen Sensors 20' aufgenommen. Auf diese Weise kann der optische Sensor 20' gleichzeitig Bilder sämtlicher Münztuben 10 aufnehmen. Auch bei dieser Variante ist der optische Sensor 20' über eine Leitung 22 mit der Auswerteeinrichtung 24 verbunden und die Auswerteeinrichtung 24 wertet die zu den jeweiligen Münztuben 10 gehörenden Bilder in der oben erläuterten Weise zur Bestimmung des Füllstands der Münztube aus, insbesondere in der oben anhand der Figuren 1 bis 4 für den ersten Aspekt oder anhand der Figuren 5 und 6 für den zweiten Aspekt der Erfindung erläuterten Weise. Bei der Ausgestaltung der Fig. 8 ist in vorteilhafter Weise nur ein optischer Sensor 20' für sämtliche Münztuben 10 der Münzspeichervorrichtung erforderlich.

**Patentansprüche**

1. Verfahren zur Bestimmung des Füllstands mindestens einer mit Münzen (12) befüllbaren Münztube (10), umfassend die Schritte:

- Aufnehmen mindestens eines ortsaufgelösten Bildes der Oberseite der mindestens einen Münztube (10) mit einem in einem definierten Abstand zu der Oberseite der mindestens einen Münztube (10) oberhalb der mindestens einen Münztube (10) angeordneten, auf die Oberseite der mindestens einen Münztube (10) gerichteten ortsauflösenden optischen Sensor (20, 20'),
- Übermitteln des mindestens einen ortsaufgelösten Bildes an eine Auswerteeinrichtung (24),
- Auswerten des mindestens einen ortsaufgelösten Bildes durch die Auswerteeinrichtung (24) mittels Bildverarbeitung, wobei der Durchmesser der obersten in die Münztube (10) gefüllten Münze (12) auf dem ortsaufgelösten Bild ermittelt wird, und wobei aus dem Verhältnis zwischen dem Innen- oder Außendurchmesser der mindestens einen Münztube (10) auf dem ortsaufgelösten Bild und dem ermittelten Durchmesser der obersten in die Münztube (10) gefüllten Münze (12) der Füllstand der mindestens einen Münztube (10) bestimmt wird, wobei der Innendurchmesser der mindestens einen Münztube (10) der Durchmesser der Öffnung der mindestens einen Münztube (10) ist, und der Außendurchmesser der mindestens einen Münztube (10) der Durchmesser der Außenwand der mindestens einen Münztube (10) ist.

2. Verfahren nach Anspruch 1, **dadurch gekennzeichnet, dass** die Auswerteeinrichtung (24) den Füllstand der mindestens einen Münztube (10) aus dem Abstand des mindestens einen ortsauflösenden Sensors (20, 20') zu der obersten in die Münztube (10) gefüllten Münze (12) ermittelt, wobei der Abstand des mindestens einen ortsauflösenden Sensors (20, 20') zu der obersten in die Münztube (10) gefüllten Münze (12) unter Berücksichtigung des definierten Abstands des mindestens einen ortsauflösenden Sensors (20, 20') zu der Oberseite der mindestens einen Münztube (10) ermittelt wird, insbesondere nach der Gleichung:

$$a = \frac{A \cdot D}{d}$$

wobei gilt:

a: Abstand des mindestens einen ortsauflösenden Sensors (20, 20') zu der obersten in die Münztube (10) gefüllten Münze (12),
A: Abstand des mindestens einen ortsauflösenden Sensors (20, 20') zu der Oberseite der mindestens einen Münztube (10),
d: Durchmesser der obersten in die Münztube (10) gefüllten Münze (12) auf dem ortsaufgelösten Bild,

D: Innendurchmesser der mindestens einen Münztube (10) auf dem ortsaufgelösten Bild.

3. Verfahren nach Anspruch 2, **dadurch gekennzeichnet, dass** der definierte Abstand des mindestens einen ortsauflösenden Sensors (20, 20') zu der Oberseite der mindestens einen Münztube (10) und/oder der Innen- oder Außendurchmesser der mindestens einen Münztube (10) auf dem ortsaufgelösten Bild in einem Speicher der Auswerteeinrichtung (24) hinterlegt ist, und dass die Auswerteeinrichtung (24) den in dem Speicher hinterlegten Abstand und/oder den in dem Speicher hinterlegten Innen- oder Außendurchmesser bei der Ermittlung des Füllstands der mindestens einen Münztube (10) nutzt.

4. Verfahren nach einem der vorhergehenden Ansprüche, **dadurch gekennzeichnet, dass** das von dem mindestens einen ortsauflösenden optischen Sensor (20, 20') aufgenommene mindestens eine ortsaufgelöste Bild auch den Innen- oder Außendurchmesser der Münztube (10) umfasst, und dass die Auswerteeinrichtung (24) den bei der Ermittlung des Füllstands der mindestens einen Münztube (10) genutzten Innen- oder Außendurchmesser der mindestens einen Münztube (10) auf dem ortsaufgelösten Bild ebenfalls mittels Bildverarbeitung des mindestens einen ortsaufgelösten Bildes ermittelt.

5. Verfahren nach einem der vorhergehenden Ansprüche, **dadurch gekennzeichnet, dass** mit dem Verfahren nach einem der vorhergehenden Ansprüche der Füllstand einer Mehrzahl von Münztuben (10) ermittelt wird.

6. Verfahren nach Anspruch 5, **dadurch gekennzeichnet, dass** jeder Münztube (10) ein eigener, jeweils in einem definierten Abstand oberhalb der jeweiligen Münztube (10) angeordneter, auf die Oberseite der jeweiligen Münztube (10) gerichteter ortsauflösender optischer Sensor (20, 20') zugeordnet ist, wobei jeder der ortsauflösenden optischen Sensoren (20, 20') mindestens ein ortsaufgelöstes Bild der Oberseite der jeweiligen Münztube (10) aufnimmt, jedes der ortsaufgelösten Bilder an die Auswerteeinrichtung (24) übermittelt wird, und die Auswerteeinrichtung (24) jedes der aufgenommenen ortsaufgelösten Bilder mittels Bildverarbeitung auswertet, wobei jeweils der Durchmesser der obersten in die jeweilige Münztube (10) gefüllten Münze (12) auf dem ortsaufgelösten Bild ermittelt wird, und wobei aus dem Verhältnis zwischen dem Innen- oder Außendurchmesser der jeweiligen Münztube (10) auf dem ortsaufgelösten Bild und dem jeweils ermittelten Durchmesser der obersten in die Münztube (10) gefüllten Münze (12) der Füllstand der jeweiligen Münztube (10) bestimmt wird, oder

dass mehreren oder sämtlichen der Münztuben (10) ein gemeinsamer, jeweils in einem definierten Abstand oberhalb der jeweiligen Münztube (10) angeorneter, auf die Oberseite der jeweiligen Münztube (10) gerichteter ortsauflösender optischer Sensor (20, 20') zugeordnet ist, wobei der gemeinsame ortsauflösende optische Sensor (20, 20') jeweils mindestens ein ortsaufgelöstes Bild der Oberseite der zugeordneten Münztuben (10) aufnimmt, jedes der ortsaufgelösten Bilder an die Auswerteeinrichtung (24) übermittelt wird, und die Auswerteeinrichtung (24) jedes der aufgenommenen ortsaufgelösten Bilder mittels Bildverarbeitung auswertet, wobei jeweils der Durchmesser der obersten in die jeweilige Münztube (10) gefüllten Münze (12) auf dem ortsaufgelösten Bild ermittelt wird, und wobei aus dem Verhältnis zwischen dem Innen- oder Außendurchmesser der jeweiligen Münztube (10) auf dem ortsaufgelösten Bild und dem jeweils ermittelten Durchmesser der obersten in die Münztube (10) gefüllten Münze (12) der Füllstand der jeweiligen Münztube (10) bestimmt wird.

7. Verfahren nach Anspruch 6, **dadurch gekennzeichnet, dass** der den mehreren oder sämtlichen der Münztuben (10) zugeordnete gemeinsame ortsauflösende optische Sensor (20, 20') jeweils über einen Lichtwellenleiter (40) optisch mit den Münztuben (10) verbunden ist, und/oder
dass der den mehreren oder sämtlichen der Münztuben (10) zugeordnete gemeinsame ortsauflösende optische Sensor (20, 20') die ortsaufgelösten Bilder der Oberseiten der zugeordneten Münztuben (10) gleichzeitig aufnimmt, wobei die ortsaufgelösten Bilder auf unterschiedlichen Bereichen des Bildsensors des optischen Sensors (20, 20') aufgenommen werden.

8. Verfahren zur Bestimmung des Füllstands mindestens einer mit Münzen (12) befüllbaren Münztube (10), die an ihrer Innenwand eine oder mehrere Markierungen (28, 29) aufweist, umfassend die Schritte:

     - Aufnehmen mindestens eines ortsaufgelösten Bildes der Oberseite der mindestens einen Münztube (10) mit einem in einem definierten Abstand oberhalb der mindestens einen Münztube (10) angeordneten, auf die Oberseite der mindestens einen Münztube (10) gerichteten ortsauflösenden optischen Sensor (20, 20'),
     - Übermitteln des mindestens einen ortsaufgelösten Bildes an eine Auswerteeinrichtung (24)
     - Auswerten des mindestens einen ortsaufgelösten Bildes durch die Auswerteeinrichtung (24) mittels Bildverarbeitung, wobei eine oder mehrere von in die mindestens eine Münztube (10) gefüllten Münzen (12) nicht verdeckte Markierungen (28, 29) an der Innenwand der mindestens einen Münztube (10) identifiziert werden und daraus der Füllstand der mindestens einen Münztube (10) bestimmt wird.

9. Verfahren nach Anspruch 8, **dadurch gekennzeichnet, dass** die Markierungen mehrere in Axialrichtung der Münztube (10) beabstandete, senkrecht zur Axialrichtung der mindestens einen Münztube (10) verlaufende Linien (28) an der Innenwand der mindestens einen Münztube (10) umfassen, und/oder
dass die Markierung mindestens eine spiralförmig entlang der Innenwand der mindestens einen Münztube (10) verlaufende Linie (29) umfasst.

10. Verfahren nach einem der Ansprüche 8 oder 9, **dadurch gekennzeichnet, dass** mit dem Verfahren nach einem der Ansprüche 8 oder 9 der Füllstand einer Mehrzahl von Münztuben (10) ermittelt wird.

11. Verfahren nach Anspruch 10, **dadurch gekennzeichnet, dass** jeder der Münztuben (10) ein eigener jeweils in einem definierten Abstand oberhalb der jeweiligen Münztube (10) angeordneter, auf die Oberseite der jeweiligen Münztube (10) gerichteter ortsauflösender optischer Sensor (20, 20') zugeordnet ist, wobei jeder der ortsauflösenden optischen Sensoren (20, 20') mindestens ein ortsaufgelöstes Bild der Oberseite der jeweiligen Münztube (10) aufnimmt, jedes der ortsaufgelösten Bilder an die Auswerteeinrichtung (24) übermittelt wird, und durch die Auswerteeinrichtung (24) mittels Bildverarbeitung ausgewertet wird, wobei jeweils eine oder mehrere von in die jeweilige Münztube (10) gefüllten Münzen (12) nicht verdeckte Markierungen (28, 29) an der Innenwand der jeweiligen Münztube (10) identifiziert werden und daraus der Füllstand der mindestens einen Münztube (10) bestimmt wird,
oder
dass mehreren oder sämtlichen der Münztuben (10) ein gemeinsamer, jeweils in einem definierten Abstand oberhalb der jeweiligen Münztube (10) angeordneter, auf die Oberseite der jeweiligen Münztube (10) gerichteter ortsauflösender optischer Sensor (20, 20') zugeordnet ist, wobei der gemeinsame ortsauflösende optische Sensor (20, 20') mindestens ein ortsaufgelöstes Bild der Oberseite der zugeordneten Münztuben (10) aufnimmt, jedes der ortsaufgelösten Bilder an die Auswerteeinrichtung (24) übermittelt wird und durch die Auswerteeinrichtung (24) mittels Bildverarbeitung ausgewertet wird, wobei jeweils eine oder mehrere von in die mindestens eine Münztube (10) gefüllten Münzen (12) nicht verdeckte Markierungen (28, 29) an der Innenwand der jeweiligen Münztube (10) identifiziert werden und daraus der Füllstand der jeweiligen Münztube (10) bestimmt wird.

**12.** Verfahren nach Anspruch 11, **dadurch gekennzeichnet, dass** der den mehreren oder sämtlichen der Münztuben (10) zugeordnete gemeinsame ortsauflösende optische Sensor (20, 20') jeweils über einen Lichtwellenleiter (40) optisch mit den Münztuben (10) verbunden ist, und/oder

dass der den mehreren oder sämtlichen der Münztuben (10) zugeordnete gemeinsame ortsauflösende optische Sensor (20, 20') die ortsaufgelösten Bilder der Oberseiten der zugeordneten Münztuben (10) gleichzeitig aufnimmt, wobei die ortsaufgelösten Bilder auf unterschiedlichen Bereichen des Bildsensors des optischen Sensors (20, 20') aufgenommen werden.

**13.** Vorrichtung zur Bestimmung des Füllstands mindestens einer mit Münzen (12) befüllbaren Münztube (10), umfassend:

- mindestens einen in einem definierten Abstand zu der Oberseite der mindestens einen Münztube (10) oberhalb der mindestens einen Münztube (10) angeordneten, auf die Oberseite der mindestens einen Münztube (10) gerichteten ortsauflösenden optischen Sensor (20, 20') zur Aufnahme mindestens eines ortsaufgelösten Bildes der Oberseite der mindestens einen Münztube (10),
- eine Auswerteeinrichtung (24), wobei der mindestens eine ortsauflösende optische Sensor (20, 20') zur Übermittlung des mindestens einen ortsaufgelösten Bildes mit der Auswerteeinrichtung (24) verbunden ist,
- wobei die Auswerteeinrichtung (24) dazu ausgebildet ist, das mindestens eine ortsaufgelöste Bild mittels Bildverarbeitung zur Ermittlung des Durchmessers der obersten in die Münztube (10) gefüllten Münze (12) auf dem ortsaufgelösten Bild auszuwerten, und wobei die Auswerteeinrichtung (24) dazu ausgebildet ist, aus dem Verhältnis zwischen dem Innen- oder Außendurchmesser der mindestens einen Münztube (10) auf dem ortsaufgelösten Bild und dem ermittelten Durchmesser der obersten in die Münztube (10) gefüllten Münze (12) den Füllstand der mindestens einen Münztube (10) zu bestimmen, wobei der Innendurchmesser der mindestens einen Münztube (10) der Durchmesser der Öffnung der mindestens einen Münztube (10) ist, und der Außendurchmesser der mindestens einen Münztube (10) der Durchmesser der Außenwand der mindestens einen Münztube (10) ist.

**14.** Vorrichtung nach Anspruch 13, **dadurch gekennzeichnet, dass** jeder Münztube (10) ein eigener, jeweils in einem definierten Abstand oberhalb der jeweiligen Münztube (10) angeordneter, auf die Oberseite der jeweiligen Münztube (10) gerichteter ortsauflösender optischer Sensor (20, 20') zur Aufnahme mindestens eines ortsaufgelösten Bildes der Oberseite der jeweiligen Münztube (10) zugeordnet ist, wobei jeder der ortsauflösenden optischen Sensoren (20, 20') zur Übermittlung des jeweiligen mindestens einen ortsaufgelösten Bildes mit der Auswerteeinrichtung (24) verbunden ist, und wobei die Auswerteeinrichtung (24) dazu ausgebildet ist, jedes der ortsaufgelösten Bilder mittels Bildverarbeitung zur Ermittlung des Durchmessers der obersten in die jeweilige Münztube (10) gefüllten Münze (12) auf dem jeweiligen ortsaufgelösten Bild auszuwerten, und wobei die Auswerteeinrichtung (24) dazu ausgebildet ist, aus dem Verhältnis zwischen dem Innen- oder Außendurchmesser der jeweiligen Münztube (10) auf dem ortsaufgelösten Bild und dem ermittelten Durchmesser der obersten in die jeweilige Münztube (10) gefüllten Münze (12) den Füllstand der jeweiligen Münztube (10) zu bestimmen, oder

dass mehreren oder sämtlichen der Münztuben (10) ein gemeinsamer, jeweils in einem definierten Abstand oberhalb der jeweiligen Münztube (10) angeordneter, auf die Oberseite der jeweiligen Münztube (10) gerichteter ortsauflösender optischer Sensor (20, 20') zugeordnet ist, wobei der ortsauflösende optische Sensor (20, 20') zur Übermittlung des jeweiligen mindestens einen ortsaufgelösten Bildes mit der Auswerteeinrichtung (24) verbunden ist, und wobei die Auswerteeinrichtung (24) dazu ausgebildet ist, jedes der ortsaufgelösten Bilder mittels Bildverarbeitung zur Ermittlung des Durchmessers der obersten in die jeweilige Münztube (10) gefüllten Münze (12) auf dem jeweiligen ortsaufgelösten Bild auszuwerten, und wobei die Auswerteeinrichtung (24) dazu ausgebildet ist, aus dem Verhältnis zwischen dem Innen- oder Außendurchmesser der jeweiligen Münztube (10) auf dem ortsaufgelösten Bild und dem ermittelten Durchmesser der obersten in die jeweilige Münztube (10) gefüllten Münze (12) den Füllstand der jeweiligen Münztube (10) zu bestimmen.

**15.** Vorrichtung nach Anspruch 14, **dadurch gekennzeichnet, dass** der den mehreren oder sämtlichen der Münztuben (10) zugeordnete gemeinsame ortsauflösende optische Sensor (20, 20') jeweils über einen Lichtwellenleiter (40) optisch mit den Münztuben (10) verbunden ist, und/oder

dass die ortsaufgelösten Bilder auf unterschiedlichen Bereichen des den mehreren oder sämtlichen der Münztuben (10) zugeordneten gemeinsamen ortsauflösenden optischen Sensors (20, 20') aufgenommen werden.

**16.** Vorrichtung zur Bestimmung des Füllstands mindestens einer mit Münzen (12) befüllbaren Münztube (10), die an ihrer Innenwand eine oder mehrere Markierungen (28, 29) aufweist, umfassend:

> - mindestens einen in einem definierten Abstand oberhalb der mindestens einen Münztube (10) angeordneten, auf die Oberseite der mindestens einen Münztube (10) gerichteten ortsauflösenden optischen Sensor (20, 20') zur Aufnahme mindestens eines ortsaufgelösten Bildes der Oberseite der mindestens einen Münztube (10),
> - eine Auswerteeinrichtung (24), wobei der mindestens eine ortsauflösende optische Sensor (20, 20') zur Übermittlung des mindestens einen ortsaufgelösten Bildes mit der Auswerteeinrichtung (24) verbunden ist,
> - wobei die Auswerteeinrichtung (24) dazu ausgebildet ist, das mindestens eine ortsaufgelöste Bild mittels Bildverarbeitung zur Identifizierung einer oder mehrerer von in die mindestens eine Münztube (10) gefüllten Münzen (12) nicht verdeckter Markierungen (28, 29) an der Innenwand der mindestens einen Münztube (10) auszuwerten, und wobei die Auswerteeinrichtung (24) dazu ausgebildet ist, daraus der Füllstand der mindestens einen Münztube (10) zu bestimmen.

17. Vorrichtung nach Anspruch 16, **dadurch gekennzeichnet, dass** die Markierungen mehrere in Axialrichtung der Münztube (10) beabstandete, jeweils senkrecht zur Axialrichtung der mindestens einen Münztube (10) verlaufende Linien (28) an der Innenwand der mindestens einen Münztube (10) umfassen, und/oder

    dass die Markierung mindestens eine spiralförmig entlang der Innenwand der mindestens einen Münztube (10) verlaufende Linie (29) umfasst.

18. Vorrichtung nach einem der Ansprüche 16 oder 17, **dadurch gekennzeichnet, dass** jeder Münztube (10) ein eigener, jeweils in einem definierten Abstand oberhalb der jeweiligen Münztube (10) angeordneter, auf die Oberseite der jeweiligen Münztube (10) gerichteter ortsauflösender optischer Sensor (20, 20') zur Aufnahme mindestens eines ortsaufgelösten Bildes der Oberseite der jeweiligen Münztube (10) zugeordnet ist, wobei jeder der ortsauflösenden optischen Sensoren (20, 20') zur Übermittlung des jeweiligen mindestens einen ortsaufgelösten Bildes mit der Auswerteeinrichtung (24) verbunden ist, wobei die Auswerteeinrichtung (24) dazu ausgebildet ist, jedes der ortsaufgelösten Bilder mittels Bildverarbeitung zur Identifizierung einer oder mehrerer von in die jeweilige Münztube (10) gefüllten Münzen (12) nicht verdeckter Markierungen (28, 29) an der Innenwand der jeweiligem Münztube (10) auszuwerten, und wobei die Auswerteeinrichtung (24) dazu ausgebildet ist, daraus der Füllstand der jeweiligen Münztube (10) zu bestimmen, oder

dass mehreren oder sämtlichen der Münztuben (10) ein gemeinsamer, jeweils in einem definierten Abstand oberhalb der jeweiligen Münztube (10) angeordneter, auf die Oberseite der jeweiligen Münztube (10) gerichteter ortsauflösender optischer Sensor (20, 20') zugeordnet ist, wobei der ortsauflösende optische Sensor (20, 20') zur Übermittlung des jeweiligen mindestens einen ortsaufgelösten Bildes mit der Auswerteeinrichtung (24) verbunden ist, und wobei die Auswerteeinrichtung (24) dazu ausgebildet ist, jedes der ortsaufgelösten Bilder mittels Bildverarbeitung zur Identifizierung einer oder mehrerer von in die jeweilige Münztube (10) gefüllten Münzen (12) nicht verdeckter Markierungen (28, 29) an der Innenwand der jeweiligem Münztube (10) auszuwerten, und wobei die Auswerteeinrichtung (24) dazu ausgebildet ist, daraus der Füllstand der jeweiligen Münztube (10) zu bestimmen.

19. Vorrichtung nach Anspruch 18, **dadurch gekennzeichnet, dass** der den mehreren oder sämtlichen der Münztuben (10) zugeordnete gemeinsame ortsauflösende optische Sensor (20, 20') jeweils über einen Lichtwellenleiter (40) optisch mit den Münztuben (10) verbunden ist, und/oder

    dass die ortsaufgelösten Bilder auf unterschiedlichen Bereichen des den mehreren oder sämtlichen der Münztuben (10) zugeordneten gemeinsamen ortsauflösenden optischen Sensors (20, 20') aufgenommen werden.

## Claims

1. A method for determining the fill level of at least one coin tube (10) that can be filled with coins (12), comprising the steps of:

   > - capturing at least one spatially resolved image of the upper side of the at least one coin tube (10) using a spatially resolving optical sensor (20, 20'), arranged at a defined distance to the upper side of the at least one coin tube (10) and above the at least one coin tube (10) and directed onto the upper side of the at least one coin tube (10),
   > - transmitting the at least one spatially resolved image to an evaluation unit (24),
   > - evaluating the at least one spatially resolved image by the evaluation unit (24) by means of image processing, wherein the diameter of the uppermost coin (12) filled into the coin tube (10) is detected in the spatially resolved image and wherein the fill level of the at least one coin tube (10) is determined from the ratio between the inner or outer diameter of the at least one coin tube (10) on the spatially resolved image and the detected diameter of the uppermost coin (12) filled into the coin tube (10), wherein the inner diameter of the at least one coin tube (10) is the diameter of the opening of the at least one coin tube (10), and wherein the outer diameter of the at least one coin tube (10) is the diameter of the outer wall of the at least one coin tube (10).

2. The method of claim 1, **characterized in that** the evaluation unit (24) detects the fill level of the at least one coin tube (10) from the distance of the at least one spatially resolving sensor (20, 20') to the uppermost coin (12) filled into the coin tube (10), wherein the distance of the at least one spatially resolving sensor (20, 20') to the uppermost coin (12) filled into the coin tube (10) is determined taking into account the defined distance of the at least one spatially resolving sensor (20, 20') to the upper side of the at least one coin tube (10), in particular according to the equation:

$$a = \frac{A \cdot D}{d}$$

wherein holds:

a: distance of the at least one spatially resolving sensor (20, 20') to the uppermost coin (12) filled into the coin tube (10),
A: distance of the at least one spatially resolving sensor (20, 20') to the upper side of the at least one coin tube (10),
d: diameter of the uppermost coin (12) filled into the coin tube (10) in the spatially resolved image,
D: inner diameter of the at least one coin tube (10) in the spatially resolved image.

3. The method of claim 2, **characterized in that** the defined distance of the at least one spatially resolving sensor (20, 20') to the upper side of the at least one coin tube (10) and/or the inner or outer diameter of the at least one coin tube (10) in the spatially resolved image is stored in a memory of the evaluation unit (24), and that the evaluation unit (24) uses the distance stored in the memory and/or the inner or outer diameter stored in the memory in the determination of the fill level of the at least one coin tube (10).

4. The method of any one of the preceding claims, **characterized in that** the at least one spatially resolved image captured by the at least one spatially resolving sensor (20, 20') comprises also the inner or outer diameter of the coin tube (10), and that the evaluation unit (24) detects the inner or outer diameter of the at least one coin tube (10) in the spatially resolved image used in the determination of the fill level of the at least one coin tube (10) likewise by means of image processing of the at least one spatially resolved image.

5. The method of any one of the preceding claims, **characterized in that** the fill level of a plurality of coin tubes (10) is detected by the method according to any one of the preceding claims.

6. The method of claim 5, **characterized in that** an own spatially resolving optical sensor (20, 20'), disposed in a defined distance above the respective coin tube (10) and directed onto the upper side of the respective coin tube (10) is associated to every coin tube (10), wherein each of the spatially resolving optical sensors (20, 20') captures at least one spatially resolved image of the upper side of the respective coin tube (10), each of the spatially resolved images is transmitted to the evaluation unit (24), and the evaluation unit (24) evaluates each of the captured spatially resolved images by means of image processing, wherein the diameter of the uppermost coin (12) filled into the respective coin tube (10) is determined in the spatially resolved image, respectively, and wherein the fill level of the respective coin tube (10) is determined from the ratio between the inner or outer diameter of the respective coin tube (10) in the spatially resolved image and the respective detected diameter of the uppermost coin (12) filled into the coin tube (10), or **in that** one common spatially resolving optical sensor (20, 20'), respectively disposed in a defined distance above the respective coin tube (10) and directed onto the upper side of the respective coin tube (10) is associated to several or all of the coin tubes (10), wherein the common spatially resolving optical sensor (20, 20') captures at least one spatially resolved image of the upper side of the associated coin tubes (10), respectively, each of the spatially resolved images is transmitted to the evaluation unit (24), and the evaluation unit (24) evaluates each of the captured spatially resolved images by means of image processing, wherein the diameter of the uppermost coin (12) filled into the respective coin tube (10) is determined in the spatially resolved image, respectively, and wherein the fill level of the respective coin tube (10) is determined from the ratio between the inner or outer diameter of the respective coin tube (10) in the spatially resolved image and the respective detected diameter of the uppermost coin (12) filled into the coin tube (10).

7. The method of claim 6, **characterized in that** the common spatially resolving optical sensor (20, 20'), associated to the several or all of the coin tubes (10), is optically connected to the coin tubes (10) via a respective fibre optic cable (40), and/or **in that** the common spatially resolving optical sensor (20, 20'), associated to the several or all of the coin tubes (10), captures the spatially resolved images of the upper sides of the associated coin tubes (10) simultaneously, wherein the spatially resolved images are captured on different areas of the image sensor of the optical sensor (20, 20').

8. A method for determining the fill level of at least one coin tube (10) that can be filled with coins (12), which has one or several marks (28, 29) on its inner wall, comprising the steps of:

- capturing at least one spatially resolved image of the upper side of the at least one coin tube (10) using a spatially resolving optical sensor (20, 20'), arranged at a defined distance above the at least one coin tube (10) and directed onto the upper side of the at least one coin tube (10),
- transmitting the at least one spatially resolved image to an evaluation unit (24),
- evaluating the at least one spatially resolved image by the evaluation unit (24) by means of image processing, wherein one or several of the marks (28, 29) on the inner wall of the at least one coin tube (10) which are not covered by coins (12) filled into the coin tube (10) are identified, and the fill level of the at least one coin tube (10) is determined from this.

9. The method of claim 8, **characterized in that** the marks comprise several lines (28), spaced apart in the axial direction of the coin tube (10) and extending vertically to the axial direction of the at least one coin tube (10) on the inner wall of the at least one coin tube (10), and/or
**in that** the marks comprise at least one line (29) which extends helically along the inner wall of the at least one coin tube (10).

10. The method of any one of claims 8 or 9, **characterized in that** the fill level of a plurality of coin tubes (10) is detected by the method of any one of the claims 8 or 9.

11. The method of claim 10, **characterized in that** one own spatially resolving optical sensor (20, 20'), respectively disposed in a defined distance above the respective coin tube (10) and directed onto the upper side of the respective coin tube (10), is associated to every one of the coin tubes (10), wherein each of the spatially resolving optical sensors (20, 20') captures at least one spatially resolved image of the upper side of the respective coin tube (10), each of the spatially resolved images is transmitted to the evaluation unit (24) and is evaluated by the evaluation unit (24) by means of image processing, wherein one or several marks (28, 29) on the inner wall of the respective coin tube (10) which are not covered by coins (12) filled into the respective coin tube (10) are identified, and the fill level of the at least one coin tube (10) is determined from this, or
**in that** one common spatially resolving optical sensor (20, 20'), disposed in a defined distance above the respective coin tube (10) and directed onto the upper side of the respective coin tube (10), is associated to several or all of the coin tubes (10), wherein the common spatially resolving optical sensor (20, 20') captures at least one spatially resolved image of the upper side of the associated coin tubes (10), each of the spatially resolved images is transmitted to the evaluation unit (24) and is evaluated by the evaluation unit (24) by means of image processing, wherein one or several marks (28, 29) on the inner wall of the respective coin tube (10) which are not covered by coins (12) filled into the at least one coin tube (10) are identified, respectively, and the fill level of the at least one coin tube (10) is determined from this.

12. The method of claim 11, **characterized in that** the common spatially resolving optical sensor (20, 20'), associated to the several or all of the coin tubes (10), is optically connected to the coin tubes (10) via a respective fibre optic cable (40), and/or
**in that** the common spatially resolving optical sensor (20, 20'), associated to several or all of the coin tubes (10) captures the spatially resolved images of the upper sides of the associated coin tubes (10) simultaneously, wherein the spatially resolved images are captured on different areas of the image sensor of the optical sensor (20, 20')

13. A device for determining the fill level of at least one coin tube (10) that can be filled with coins (12), comprising:

- at least one spatially resolving optical sensor (20, 20'), arranged at a defined distance to the upper side of the at least one coin tube (10) and above the at least one coin tube (10) and directed onto the upper side of the at least one coin tube (10) for capturing at least one spatially resolved image of the upper side of the at least one coin tube (10),
- an evaluation unit (24), wherein the at least one spatially resolving optical sensor (20, 20') is connected to the evaluation unit (24) for transmitting the at least one spatially resolved image,
- wherein the evaluation unit (24) is adapted to evaluate the at least one spatially resolved image by means of image processing for detection of the diameter of the uppermost coin (12) filled into the coin tube (10) in the spatially resolved image, and wherein the evaluation unit (24) is adapted to determine the fill level of the at least one coin tube (10) from the ratio between the inner or outer diameter of the at least one coin tube (10) in the spatially resolved image and the detected diameter of the uppermost coin (12) filled into the coin tube (10), wherein the inner diameter of the at least one coin tube (10) is the diameter of the opening of the at least one coin tube (10), and wherein the outer diameter of the at least one coin tube (10) is the diameter of the outer wall of the at least one coin tube (10).

14. The device of claim 13, **characterized in that** one own spatially resolving optical sensor (20, 20') for capturing at least one spatially resolved image of the upper side of the respective coin tube (10), disposed in a defined distance above the respective coin tube (10) and directed onto the upper side of the respective coin tube (10) is associated to every coin tube (10), wherein each of the spatially resolving optical sensors (20, 20') is connected to the evaluation unit (24) for transmitting the respective at least one spatially resolved image, and wherein the evaluation unit (24) is adapted to evaluate each of the spatially resolved images by means of image processing to determine the diameter of the uppermost coin (12) filled into the respective coin tube (10) in the spatially resolved image, and wherein the evaluation unit (24) is adapted for determination of the fill level of the respective coin tube (10) from the ratio between the inner or outer diameter of the respective coin tube (10) in the spatially resolved image and the respective detected diameter of the uppermost coin (12) filled into the respective coin tube (10), or

**in that** one common spatially resolving optical sensor (20, 20'), disposed in a defined distance above the respective coin tube (10) and directed onto the upper side of the respective coin tube (10) is associated to several or all of the coin tubes (10), wherein the spatially resolving optical sensor (20, 20') is connected to the evaluation unit (24) for transmitting the at least one spatially resolved image, and wherein the evaluation unit (24) is adapted to evaluate each of the spatially resolved images by means of image processing for determination of the diameter of the uppermost coin (12) filled into the respective coin tube (10) in the respective spatially resolved image, and wherein the evaluation unit (24) is adapted to determine the fill level of the respective coin tube (10) from the ratio between the inner or outer diameter of the respective coin tube (10) in the spatially resolved image and the detected diameter of the uppermost coin (12) filled into the respective coin tube (10).

15. The device of claim 14, **characterized in that** the common spatially resolving optical sensor (20, 20'), associated to the several or all of the coin tubes (10), is optically connected to the coin tubes (10) via a respective fibre optic cable (40) and/or
**in that** the spatially resolved images are captured on different areas of the common spatially resolving optical sensor (20, 20') associated to the several or all of the coin tubes (10).

16. A device for determining the fill level of at least one coin tube (10) that can be filled with coins (12), which has one or several marks (28, 29) on its inner wall, comprising:

- at least one spatially resolving optical sensor (20, 20'), arranged at a defined distance above the at least one coin tube (10) and directed onto the upper side of the at least one coin tube (10) for capturing at least one spatially resolved image of the upper side of the at least one coin tube (10),
- an evaluation unit (24), wherein the at least one spatially resolving optical sensor (20, 20') is connected to the evaluation unit (24) for transmitting the at least one spatially resolved image,
- wherein the evaluation unit (24) is adapted to evaluate the at least one spatially resolved image by means of image processing for identification of one or several marks (28, 29) on the inner wall of the at least one coin tube (10) which are not covered by coins (12) filled into the at least one coin tube (10), and wherein the evaluation unit (24) is adapted to determine the fill level of the at least one coin tube (10) from this.

17. The device of claim 16, **characterized in that** the marks comprise several lines (28), spaced apart in the axial direction of the coin tube (10) and extending vertically to the axial direction of the at least one coin tube (10) on the inner wall of the at least one coin tube (10), and/or
**in that** the mark comprises at least one line (29) which extends helically along the inner wall of the at least one coin tube (10).

18. The device of any one of claims 16 or 17, **characterized in that** one own spatially resolving optical sensor (20, 20'), respectively disposed in a defined distance above the respective coin tube (10) and directed onto the upper side of the respective coin tube (10) is associated to every coin tube (10) for capturing at least one spatially resolved image of the upper side of the respective coin tube (10), wherein each of the spatially resolving optical sensors (20, 20') is connected to the evaluation unit (24) for transmitting the respective at least one spatially resolved image, and wherein the evaluation unit (24) is adapted to evaluate each of the spatially resolved images by means of image processing for identification of one or several marks (28, 29) on the inner wall of the respective coin tube (10) which are not covered by coins (12) filled into the respective coin tube (10), and wherein the evaluation unit (24) is adapted to determine the fill level of the at least one coin tube (10) from this, or

**in that** one common spatially resolving optical sensor (20, 20'), respectively disposed in a defined distance above the respective coin tube (10) and directed onto the upper side of the respective coin tube (10) is associated to several or all of the coin tubes (10), wherein the spatially resolving optical sensor (20, 20') is connected to the evaluation unit (24) for transmitting the respective at least one spatially resolved image, and wherein the evaluation unit (24) is adapted to evaluate each of the spatially resolved images by means of image processing for identification of one or several marks (28, 29) on the inner wall of the respective coin tube (10) which are not covered by coins (12) filled into the respective coin tube (10), and wherein the evaluation unit (24) is adapted to determine the fill level of the at least one coin tube (10) from this.

**19.** The device of claim 18, **characterized in that** the one common spatially resolving optical sensor (20, 20'), associated to several or all of the coin tubes (10), is optically connected to the coin tubes (10) via a respective fibre optic cable (40), and/or

**in that** the spatially resolved images are captured on different areas of the common spatially resolving optical sensor (20, 20') which is associated to several or all of the coin tubes (10).

**Revendications**

**1.** Procédé de détermination du niveau de remplissage d'au moins un tube à pièces de monnaie (10) pouvant être rempli de pièces de monnaie (12), comprenant les étapes suivantes :

- capture d'au moins une image à résolution spatiale du côté supérieur de l'au moins un tube à pièces de monnaie (10) avec un capteur optique (20, 20') à résolution spatiale disposé à un écart défini par rapport au côté supérieur de l'au moins un tube à pièces de monnaie (10) au-dessus de l'au moins un tube à pièces de monnaie (10), orienté sur le côté supérieur de l'au moins un tube à pièces de monnaie (10),
- communication de l'au moins une image à résolution spatiale à un dispositif d'interprétation (24),
- interprétation de l'au moins une image à résolution spatiale par le dispositif d'interprétation (24) au moyen d'un traitement d'image, le diamètre de la pièce de monnaie (12) disposée le plus en haut dans le tube à pièces de monnaie (10) étant relevé sur l'image à résolution spatiale, et le niveau de remplissage de l'au moins un tube à pièces de monnaie (10) étant déterminé à partir du rapport entre le diamètre intérieur ou extérieur de l'au moins un tube à pièces de monnaie (10) sur l'image à résolution spatiale et le diamètre relevé de la pièce de monnaie (12) disposée le plus en haut dans le tube à pièces de monnaie (10), le diamètre intérieur de l'au moins un tube à pièces de monnaie (10) étant le diamètre de l'ouverture de l'au moins un tube à pièces de monnaie (10) et le diamètre extérieur de l'au moins un tube à pièces de monnaie (10) étant le diamètre de la paroi externe de l'au moins un tube à pièces de monnaie (10).

**2.** Procédé selon la revendication 1, **caractérisé en ce que** le dispositif d'interprétation (24) relève le niveau de remplissage de l'au moins un tube à pièces de monnaie (10) à partir de l'écart entre l'au moins un capteur (20, 20') à résolution spatiale et la pièce de monnaie (12) disposée le plus en haut dans le tube à pièces de monnaie (10), l'écart entre l'au moins un capteur (20, 20') à résolution spatiale et la pièce de monnaie (12) disposée le plus en haut dans le tube à pièces de monnaie (10) étant relevé en tenant compte de l'écart défini entre l'au moins un capteur (20, 20') à résolution spatiale et le côté supérieur de l'au moins un tube à pièces de monnaie (10), notamment selon l'équation :

$$a = \frac{A - D}{d}$$

où :

a : l'écart entre l'au moins un capteur (20, 20') à résolution spatiale et la pièce de monnaie (12) disposée le plus en haut dans le tube à pièces de monnaie (10),
A : l'écart entre l'au moins un capteur (20, 20') à résolution spatiale et le côté supérieur de l'au moins un tube à pièces de monnaie (10),
d : le diamètre de la pièce de monnaie (12) disposée le plus en haut dans le tube à pièces de monnaie (10) sur l'image à résolution spatiale,
D : le diamètre intérieur de l'au moins un tube à pièces de monnaie (10) sur l'image à résolution spatiale.

**3.** Procédé selon la revendication 2, **caractérisé en ce que** l'écart défini entre l'au moins un capteur (20, 20') à résolution spatiale et le côté supérieur de l'au moins un tube à pièces de monnaie (10) et/ou le diamètre intérieur ou extérieur de l'au moins un tube à pièces de monnaie (10) sur l'image à résolution spatiale est stocké dans une mémoire du dispositif d'interprétation (24), et **en ce que** le dispositif d'interprétation (24) utilise l'écart stocké dans la mémoire et/ou le diamètre intérieur ou extérieur stocké dans la mémoire lors du relevé du niveau de remplissage de l'au moins un tube à pièces de monnaie (10).

4. Procédé selon l'une des revendications précédentes, **caractérisé en ce que** l'au moins une image à résolution spatiale capturée par l'au moins un capteur optique (20, 20') à résolution spatiale comprend également le diamètre intérieur ou extérieur du tube à pièces de monnaie (10), et **en ce que** le dispositif d'interprétation (24) relève le diamètre intérieur ou extérieur de l'au moins un tube à pièces de monnaie (10) sur l'image à résolution spatiale utilisé lors du relevé du niveau de remplissage de l'au moins un tube à pièces de monnaie (10) également au moyen d'un traitement d'image de l'au moins une image à résolution spatiale.

5. Procédé selon l'une des revendications précédentes, **caractérisé en ce que** le niveau de remplissage d'une pluralité de tubes à pièces de monnaie (10) est relevé avec le procédé selon l'une des revendications précédentes.

6. Procédé selon la revendication 5, **caractérisé en ce qu'**un capteur optique (20, 20') à résolution spatiale propre, disposé respectivement à un écart défini au-dessus du tube à pièces de monnaie (10) respectif, orienté sur le côté supérieur de l'au moins un tube à pièces de monnaie (10) respectif, est associé à chaque tube à pièces de monnaie (10), chacun des capteurs optiques (20, 20') à résolution spatiale capturant au moins une image à résolution spatiale du côté supérieur du tube à pièces de monnaie (10) respectif, chacune des images à résolution spatiale étant communiquée au dispositif d'interprétation (24) et le dispositif d'interprétation (24) interprétant chacune des images à résolution spatiale capturées au moyen d'un traitement d'image, le diamètre de la pièce de monnaie (12) disposée le plus en haut dans le tube à pièces de monnaie (10) respectif étant respectivement relevé sur l'image à résolution spatiale, et le niveau de remplissage du tube à pièces de monnaie (10) respectif étant déterminé à partir du rapport entre le diamètre intérieur ou extérieur du tube à pièces de monnaie (10) respectif sur l'image à résolution spatiale et le diamètre respectivement relevé de la pièce de monnaie (12) disposée le plus en haut dans le tube à pièces de monnaie (10), ou **en ce qu'**un capteur optique (20, 20') à résolution spatiale commun, disposé respectivement à un écart défini au-dessus du tube à pièces de monnaie (10) respectif, orienté sur le côté supérieur du tube à pièces de monnaie (10) respectif, est associé à plusieurs ou à tous les tubes à pièces de monnaie (10), le capteur optique (20, 20') à résolution spatiale commun capturant respectivement au moins une image à résolution spatiale du côté supérieur des tubes à pièces de monnaie (10) associés, chacune des images à résolution spatiale étant communiquée au dispositif d'interprétation (24) et le dispositif d'interprétation (24) interprétant chacune des images à résolution spatiale capturées au moyen d'un traitement d'image, le diamètre de la pièce de monnaie (12) disposée le plus en haut dans le tube à pièces de monnaie (10) respectif étant respectivement relevé sur l'image à résolution spatiale, et le niveau de remplissage du tube à pièces de monnaie (10) respectif étant déterminé à partir du rapport entre le diamètre intérieur ou extérieur du tube à pièces de monnaie (10) respectif sur l'image à résolution spatiale et le diamètre respectivement relevé de la pièce de monnaie (12) disposée le plus en haut dans le tube à pièces de monnaie (10).

7. Procédé selon la revendication 6, **caractérisé en ce que** le capteur optique (20, 20') à résolution spatiale commun associé aux plusieurs ou à tous les tubes à pièces de monnaie (10) est respectivement relié optiquement aux tubes à pièces de monnaie (10) par le biais d'une fibre optique (40) et/ou **en ce que** le capteur optique (20, 20') à résolution spatiale commun associé aux plusieurs ou à tous les tubes à pièces de monnaie (10) capture simultanément les images à résolution spatiale des côtés supérieurs des tubes à pièces de monnaie (10) associés, les images à résolution spatiale étant capturées sur des zones différentes du capteur d'image du capteur optique (20, 20').

8. Procédé de détermination du niveau de remplissage d'au moins un tube à pièces de monnaie (10) pouvant être rempli de pièces de monnaie (12), lequel possède un ou plusieurs repères (28, 29) au niveau de sa paroi interne, comprenant les étapes suivantes :

    - capture d'au moins une image à résolution spatiale du côté supérieur de l'au moins un tube à pièces de monnaie (10) avec un capteur optique (20, 20') à résolution spatiale disposé à un écart défini au-dessus de l'au moins un tube à pièces de monnaie (10), orienté sur le côté supérieur de l'au moins un tube à pièces de monnaie (10),
    - communication de l'au moins une image à résolution spatiale à un dispositif d'interprétation (24),
    - interprétation de l'au moins une image à résolution spatiale par le dispositif d'interprétation (24) au moyen d'un traitement d'image, un ou plusieurs repères (28, 29) au niveau de la paroi interne de l'au moins un tube à pièces de monnaie (10) non recouverts par les pièces de monnaie (12) disposées dans l'au moins un tube à pièces de monnaie (10) étant identifiés et le niveau de remplissage de l'au moins un tube à pièces de monnaie (10) étant déterminé à partir de cela.

9. Procédé selon la revendication 8, **caractérisé en ce que** les repères comprennent plusieurs lignes (28) sur la paroi interne de l'au moins un tube à pièces de monnaie (10), espacées dans la direction axiale du tube à pièces de monnaie (10) et s'étendant perpendiculairement à la direction axiale de l'au moins un tube à pièces de monnaie (10), et/ou **en ce que** le repère comprend au moins une ligne (29) qui s'étend de manière hélicoïdale le long de la paroi interne de l'au moins un tube à pièces de monnaie (10).

10. Procédé selon l'une des revendications 8 ou 9, **caractérisé en ce que** le niveau de remplissage d'une pluralité de tubes à pièces de monnaie (10) est relevé avec le procédé selon l'une des revendications 8 ou 9.

11. Procédé selon la revendication 10, **caractérisé en ce qu'**un capteur optique (20, 20') à résolution spatiale propre, disposé respectivement à un écart défini au-dessus du tube à pièces de monnaie (10) respectif, orienté sur le côté supérieur du tube à pièces de monnaie (10) respectif, est associé à chacun des tubes à pièces de monnaie (10), chacun des capteurs optiques (20, 20') à résolution spatiale capturant au moins une image à résolution spatiale du côté supérieur du tube à pièces de monnaie (10) respectif, chacune des images à résolution spatiale étant communiquée au dispositif d'interprétation (24) et étant interprétée par le dispositif d'interprétation (24) au moyen d'un traitement d'image, un ou plusieurs repères (28, 29) au niveau de la paroi interne du tube à pièces de monnaie (10) respectif non recouverts par les pièces de monnaie (12) disposées dans le tube à pièces de monnaie (10) respectif étant respectivement identifiés et le niveau de remplissage de l'au moins un tube à pièces de monnaie (10) étant déterminé à partir de cela, ou **en ce qu'**un capteur optique (20, 20') à résolution spatiale commun, disposé respectivement à un écart défini au-dessus du tube à pièces de monnaie (10) respectif, orienté sur le côté supérieur du tube à pièces de monnaie (10) respectif, est associé à plusieurs ou à tous les tubes à pièces de monnaie (10), le capteur optique (20, 20') à résolution spatiale commun capturant au moins une image à résolution spatiale du côté supérieur des tubes à pièces de monnaie (10) associés, chacune des images à résolution spatiale étant communiquée au dispositif d'interprétation (24) et étant interprétée par le dispositif d'interprétation (24) au moyen d'un traitement d'image, un ou plusieurs repères (28, 29) au niveau de la paroi interne du tube à pièces de monnaie (10) respectif non recouverts par les pièces de monnaie (12) disposées dans l'au moins un tube à pièces de monnaie (10) étant respectivement identifiés et le niveau de remplissage de l'au moins un tube à pièces de monnaie (10) étant déterminé à partir de cela.

12. Procédé selon la revendication 11, **caractérisé en ce que** le capteur optique (20, 20') à résolution spatiale commun associé aux plusieurs ou à tous les tubes à pièces de monnaie (10) est respectivement relié optiquement aux tubes à pièces de monnaie (10) par le biais d'une fibre optique (40) et/ou **en ce que** le capteur optique (20, 20') à résolution spatiale commun associé aux plusieurs ou à tous les tubes à pièces de monnaie (10) capture simultanément les images à résolution spatiale des côtés supérieurs des tubes à pièces de monnaie (10) associés, les images à résolution spatiale étant capturées sur des zones différentes du capteur d'image du capteur optique (20, 20').

13. Arrangement de détermination du niveau de remplissage d'au moins un tube à pièces de monnaie (10) pouvant être rempli de pièces de monnaie (12), comprenant :

    - au moins un capteur optique (20, 20') à résolution spatiale disposé à un écart défini par rapport au côté supérieur de l'au moins un tube à pièces de monnaie (10) au-dessus de l'au moins un tube à pièces de monnaie (10), orienté sur le côté supérieur de l'au moins un tube à pièces de monnaie (10) et destiné à capturer au moins une image à résolution spatiale du côté supérieur de l'au moins un tube à pièces de monnaie (10),
    - un dispositif d'interprétation (24), l'au moins un capteur optique (20, 20') à résolution spatiale étant relié au dispositif d'interprétation (24) en vue de communiquer l'au moins une image à résolution spatiale,
    - le dispositif d'interprétation (24) étant configuré pour interpréter l'au moins une image à résolution spatiale au moyen d'un traitement d'image en vue de relever le diamètre de la pièce de monnaie (12) disposée le plus en haut dans le tube à pièces de monnaie (10) sur l'image à résolution spatiale, et le dispositif d'interprétation (24) étant configuré pour déterminer le niveau de remplissage de l'au moins un tube à pièces de monnaie (10) à partir du rapport entre le diamètre intérieur ou extérieur de l'au moins un tube à pièces de monnaie (10) sur l'image à résolution spatiale et le diamètre relevé de la pièce de monnaie (12) disposée le plus en haut dans le tube à pièces de monnaie (10), le diamètre intérieur de l'au moins un tube à pièces de monnaie (10) étant le diamètre de l'ouverture de l'au moins un tube à pièces de monnaie (10) et le diamètre extérieur de l'au moins un tube à pièces de monnaie (10) étant le diamètre de la paroi externe de l'au moins un tube à pièces de monnaie (10).

14. Arrangement selon la revendication 13, **caractérisé en ce qu'**un capteur optique (20, 20') à résolution spatiale propre, disposé respectivement à un écart défini au-dessus du tube à pièces de monnaie (10) respectif, orienté sur le côté supérieur du tube à pièces de monnaie (10) respectif, est associé à chaque tube à pièces de monnaie (10) en vue de capturer au moins une image à résolution spatiale du côté supérieur du tube à pièces de monnaie (10) respectif, chacun des capteurs optiques (20, 20') à résolution spatiale étant relié au dispositif d'interprétation (24) en vue de communiquer l'au moins une image à résolution spatiale respective, et le dispositif d'interprétation (24) étant configuré pour interpréter chacune des images à résolution spatiale au moyen d'un traitement d'image en vue de relever le diamètre de la pièce de monnaie (12) disposée le plus en haut dans le tube à pièces de monnaie (10) respectif sur l'image à résolution spatiale respective, et le dispositif d'interprétation (24) étant configuré pour déterminer le niveau de remplissage du tube à pièces de monnaie (10) respectif à partir du rapport entre le diamètre intérieur ou extérieur du tube à pièces de monnaie (10) respectif sur l'image à résolution spatiale et le diamètre relevé de la pièce de monnaie (12) disposée le plus en haut dans le tube à pièces de monnaie (10) respectif, ou

**en ce qu'**un capteur optique (20, 20') à résolution spatiale commun, disposé respectivement à un écart défini au-dessus du tube à pièces de monnaie (10) respectif, orienté sur le côté supérieur du tube à pièces de monnaie (10) respectif, est associé à plusieurs ou à tous les tubes à pièces de monnaie (10), le capteur optique (20, 20') à résolution spatiale étant relié au dispositif d'interprétation (24) en vue de communiquer l'au moins une image à résolution spatiale respective, et le dispositif d'interprétation (24) étant configuré pour interpréter chacune des images à résolution spatiale au moyen d'un traitement d'image en vue de relever le diamètre de la pièce de monnaie (12) disposée le plus en haut dans le tube à pièces de monnaie (10) respectif sur l'image à résolution spatiale respective, et le dispositif d'interprétation (24) étant configuré pour déterminer le niveau de remplissage du tube à pièces de monnaie (10) respectif à partir du rapport entre le diamètre intérieur ou extérieur du tube à pièces de monnaie (10) respectif sur l'image à résolution spatiale et le diamètre relevé de la pièce de monnaie (12) disposée le plus en haut dans le tube à pièces de monnaie (10) respectif.

15. Arrangement selon la revendication 14, **caractérisé en ce que** le capteur optique (20, 20') à résolution spatiale commun associé aux plusieurs ou à tous les tubes à pièces de monnaie (10) est respectivement relié optiquement aux tubes à pièces de monnaie (10) par le biais d'une fibre optique (40) et/ou **en ce que** les images à résolution spatiale sont capturées sur des zones différentes capteur optique (20, 20') à résolution spatiale commun associé aux plusieurs ou à tous les tubes à pièces de monnaie (10).

16. Arrangement de détermination du niveau de remplissage d'au moins un tube à pièces de monnaie (10) pouvant être rempli de pièces de monnaie (12), lequel possède un ou plusieurs repères (28, 29) au niveau de sa paroi interne, comprenant :

   - au moins un capteur optique (20, 20') à résolution spatiale disposé à un écart défini au-dessus de l'au moins un tube à pièces de monnaie (10), orienté sur le côté supérieur de l'au moins un tube à pièces de monnaie (10) et destiné à capturer au moins une image à résolution spatiale du côté supérieur de l'au moins un tube à pièces de monnaie (10),
   - un dispositif d'interprétation (24), l'au moins un capteur optique (20, 20') à résolution spatiale étant relié au dispositif d'interprétation (24) en vue de communiquer l'au moins une image à résolution spatiale,
   - le dispositif d'interprétation (24) étant configuré pour interpréter l'au moins une image à résolution spatiale au moyen d'un traitement d'image en vue d'identifier un ou plusieurs repères (28, 29) au niveau de la paroi interne de l'au moins un tube à pièces de monnaie (10) non recouverts par les pièces de monnaie (12) disposées dans l'au moins un tube à pièces de monnaie (10), et le dispositif d'interprétation (24) étant configuré pour déterminer à partir de cela le niveau de remplissage de l'au moins un tube à pièces de monnaie (10).

17. Arrangement selon la revendication 16, **caractérisé en ce que** les repères comprennent plusieurs lignes (28) espacées sur la paroi interne de l'au moins un tube à de monnaie (10), espacées dans la direction axiale du tube à pièces de monnaie (10) et s'étendant respectivement perpendiculairement à la direction axiale de l'au moins un tube à pièces de monnaie (10), et/ou **en ce que** le repère comprend au moins une ligne (29) qui s'étend de manière hélicoïdale le long de la paroi interne de l'au moins un tube à pièces de monnaie (10).

18. Arrangement selon l'une des revendications 16 ou 17, **caractérisé en ce qu'**un capteur optique (20, 20') à résolution spatiale propre, disposé respectivement à un écart défini au-dessus du tube à pièces de monnaie (10) respectif, orienté sur le côté supérieur du tube à pièces de monnaie (10) respectif, est associé à chaque tube à pièces de monnaie (10) en vue de capturer au moins une image à résolution spatiale du côté supérieur du tube à pièces de monnaie (10) respectif, chacun des capteurs optiques (20, 20') à résolution spatiale étant relié au dispositif d'interprétation (24) en vue de communiquer l'au moins une image à résolution spatiale respective, le dispositif d'interprétation (24) étant configuré pour interpréter chacune des images à résolution spatiale au moyen d'un traitement d'image en vue d'identifier un ou plusieurs repères (28, 29) au niveau de la paroi interne du tube à pièces de monnaie (10) respectif non recouverts par les pièces de monnaie (12) disposées dans le tube à pièces de monnaie (10) respectif et le dispositif d'interprétation (24) étant configuré pour déterminer à partir de cela le niveau de remplissage du tube à pièces de monnaie (10) respectif, ou **en ce qu'**un capteur optique (20, 20') à résolution spatiale commun, disposé respectivement à un écart défini au-dessus du tube à pièces de monnaie (10) respectif, orienté sur le côté supérieur du tube à pièces de monnaie (10) respectif, est associé à plusieurs ou à tous les tubes à pièces de monnaie (10), le capteur optique (20, 20') à résolution spatiale étant relié au dispositif d'interprétation (24) en vue de communiquer l'au moins une image à résolution spatiale respective, et le dispositif d'interprétation (24) étant configuré pour interpréter chacune des images à résolution spatiale au moyen d'un traitement d'image en vue d'identifier un ou plusieurs repères (28, 29) au niveau de la paroi interne du tube à pièces de monnaie (10) respectif non recouverts par les pièces de monnaie (12) disposées dans le tube à pièces de monnaie (10) respectif et le dispositif d'interprétation (24) étant configuré pour déterminer à partir de cela le niveau de remplissage du tube à pièces de monnaie (10) respectif.

19. Arrangement selon la revendication 18, **caractérisé en ce que** le capteur optique (20, 20') à résolution spatiale commun associé aux plusieurs ou à tous les tubes à pièces de monnaie (10) est respectivement relié optiquement aux tubes à pièces de monnaie (10) par le biais d'une fibre optique (40) et/ou **en ce que** les images à résolution spatiale sont capturées sur des zones différentes du capteur optique (20, 20') à résolution spatiale commun associé aux plusieurs ou à tous les tubes à pièces de monnaie (10).

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6425817 B1
- US 6626750 B2
- US 7481702 B2
- US 20140200071 A1
- EP 1990778 A1
- DE 4041078 A1
- DE 102004034149 A1
- DE 8705214 U1
- DE 3926407 A1